# EUROPEAN PATENT APPLICATION

(11) **EP 4 832 188 A1**
(43) Date of publication of application: **28.10.2026**
(21) Application number: 24926467.2
(22) Date of filing: 01.03.2024
(51) Int. Cl.: H01M 50/204, H01M 50/10, H01M 10/617

(54) **BATTERY, ELECTRIC DEVICE, AND ENERGY STORAGE DEVICE**

(71) Applicant: Contemporary Amperex Technology Co., Limited, Ningde, Fujian 352100 (CN)
(72) Inventor: JIN, Haizu, Ningde, Fujian 352100 (CN); ZHAO, Fenggang, Ningde, Fujian 352100 (CN); WU, Kai, Ningde, Fujian 352100 (CN); CHEN, Wei, Ningde, Fujian 352100 (CN); NIE, Xianzhen, Ningde, Fujian 352100 (CN); ZHENG, Yulian, Ningde, Fujian 352100 (CN); ZHOU, Wenlin, Ningde, Fujian 352100 (CN)
(74) Representative: Lorenz Seidler Gossel Part. mbB
(86) International application number: PCT/CN2024/079703
(87) International publication number: WO 2025/179591

(57) **Abstract**

A battery, an electric device, and an energy storage device. The battery comprises: at least one battery cell (10), wherein each battery cell (10) has a pole (101) on a first surface (103) on one side in a first direction (X); an accommodating case (11), wherein an accommodating cavity is provided in the accommodating case (11), and each battery cell (10) is accommodated in the accommodating cavity; and a heat exchange assembly (14) provided on the first surface (103) of the battery cell (10) and used for exchanging heat with each battery cell (10), wherein the projection of the pole (101) along the first direction (X) within the first surface (103) does not overlap the projection of the heat exchange assembly (14) along the first direction (X) within the first surface (103).

## Description

### TECHNICAL FIELD

The present disclosure relates to the technical field of battery production, and specifically, to a battery, an electric device, and an energy storage device.

### BACKGROUND

With the promotion and popularization of the green development concept, new energy batteries are being used more and more widely in daily life and industry. For example, new energy vehicles equipped with batteries have already been widely used. In addition, batteries are also increasingly used in the field of energy storage or the like.

A battery continuously releases heat during operation, causing the temperature in the battery to rise. High temperature not only affects the operation efficiency of the battery, but also causes safety hazards. Therefore, in addition to a battery cell, the battery is further provided with a heat exchange assembly, so that the battery can operate at an appropriate temperature.

How to integrate the heat exchange assembly into the battery is one of issues of concern in the industry.

### SUMMARY

In view of this, embodiments of the present disclosure are intended to provide a battery, an electric device, and an energy storage device, in which a heat exchange assembly and a pole share a horizontal space to improve space utilization.

To achieve the foregoing objective, the technical solutions of the embodiments of the present disclosure are achieved as follows:

According to a first aspect, an embodiment of the present disclosure provides a battery, comprising: at least one battery cell, wherein each battery cell has a pole on a first surface on one side in a first direction; an accommodating case, wherein an accommodating cavity is provided in the accommodating case, and each battery cell is accommodated in the accommodating cavity; and a heat exchange assembly, disposed on the first surface of the battery cell and used for exchanging heat with each battery cell, wherein the projection of the pole along the first direction within the first surface does not overlap the projection of the heat exchange assembly along the first direction within the first surface.

In the battery according to this embodiment of the present disclosure, since both the pole and the heat exchange assembly are disposed on the first surface, and the projection of the pole along the first direction does not overlap the projection of the heat exchange assembly along the first direction, the pole and the heat exchange assembly share the horizontal space between the first surface and the wall surface of the accommodating case, thereby improving the space utilization in the accommodating cavity, which not only contributes to reducing the size of the battery, but also contributes to improving the energy density of the battery. Since the battery cell and the heat exchange assembly are accommodated in the accommodating cavity of the accommodating case, the accommodating case can protect the battery cell and the heat exchange assembly. Since the heat exchange assembly is disposed on the first surface of the battery cell, the heat exchange assembly can exchange heat with the battery cell.

In some embodiments, the first surface has a first region and a second region, the pole is disposed in the first region, and the heat exchange assembly is disposed in the second region. Therefore, the pole is concentrated in the first region, the heat exchange assembly is concentrated in the second region. The pole disposed in the first region and the heat exchange assembly disposed in the second region do not interfere with each other.

In some embodiments, there are two second regions, and the two second regions are respectively located on two sides of the first region.

Since the first region is located in the middle, and the two second regions are respectively located on the two sides, the pole is concentrated in the first region that is relatively located in the middle of the first surface, and two heat exchange assemblies may be respectively disposed in the spaces on two sides of the pole. The pole and the heat exchange assembly make full use of the space of the accommodating cavity on the first surface. The arrangement is compact and reasonable, improving the space utilization in the accommodating cavity, which not only contributes to reducing the size of the battery, but also contributes to improving the energy density of the battery.

In some embodiments, there are two first regions, and the second region is located between the two first regions.

Since the second region is located in the middle and the two first regions are respectively located on two sides, one heat exchange assembly is disposed in the middle of the first surface, and the spaces on two sides of the heat exchange assembly are used for disposing the poles. The pole and the heat exchange assembly make full use of the space of the accommodating cavity on the first surface. The arrangement is compact and reasonable, improving the space utilization in the accommodating cavity, which not only contributes to reducing the size of the battery, but also contributes to improving the energy density of the battery.

In some embodiments, the area of the second region is greater than the area of the first region.

Therefore, the pole is concentrated in the first region which is relatively small, reserving relatively large area for the heat exchange assembly. The contact area between the heat exchange assembly and the battery cells becomes relatively large, enabling the heat exchange assembly to meet the heat exchange requirement of the battery cell.

In some embodiments, the plurality of battery cells are arranged at least along a second direction, the second direction is consistent with the width direction of the first surface, and the heat exchange assembly at least partially covers the second region of each battery cell.

Since the plurality of battery cells are arranged along the second direction, both the first region and the second region can extend along the second direction to form relatively regular regions for disposing the poles and the heat exchange assemblies. Since the heat exchange assembly at least partially covers the second region of each battery cell, the heat exchange assembly is in contact with each battery cell, so that the heat exchange assembly can exchange heat with each battery cell.

In some embodiments, the heat exchange assembly comprises: a heat exchange plate; and an adhesive layer, comprising a first adhesive layer disposed on the surface of one side that is of the heat exchange plate and that is close to the battery cell, wherein the heat exchange plate is adhered to the battery cell by using the first adhesive layer.

Since the heat exchange plate is adhered to the surface of the battery cell by using the first adhesive layer, the heat exchange plate is in relatively close contact with the battery cell, which contributes to improving the heat exchange effect of the heat exchange plate on the battery cell. In addition, since the heat exchange plate is adhered to the battery cell to form a whole, the structural strength of the battery cell is improved.

In some embodiments, the heat exchange assembly comprises: a heat exchange plate; and an adhesive layer, wherein the adhesive layer comprises a second adhesive layer disposed on the surface of one side that is of the heat exchange plate and that is away from the battery cell, and the heat exchange plate is adhered to the accommodating case by using the second adhesive layer.

Since the heat exchange plate is adhered to the inner wall surface of the accommodating case by using the second adhesive layer, the heat exchange plate is stably fixed in the accommodating cavity. The heat exchange plate and the accommodating case are adhered into a whole, which contributes to improving the structural strength of the accommodating case. In the case where adhesive layers are disposed on two sides of the heat exchange plate, since the battery cell and the accommodating case are respectively adhered to the two sides of the heat exchange plate, the battery cell is stably fixed in the accommodating cavity.

In some embodiments, the heat exchange plate is configured as a flat plate, or the heat exchange plate is configured as a shape that undulates along the first direction.

The heat exchange plate is configured as the flat plate, so that the heat exchange plate can be closely attached to the surface of the battery cell, thereby improving the heat exchange effect. The flat plate-shaped heat exchange plate is simple in structure and easy to manufacture. By configuring the heat exchange plate as the shape that undulates along the first direction, the heat exchange plate can be compressed by a force in the first direction, and when the distance between the surface of the battery cell and the inner wall of the accommodating case is relatively small due to production tolerances, the undulating heat exchange plate can deform to adapt to the relatively small distance, thereby reducing the impact of the production tolerances.

In some embodiments, the heat exchange plate is configured to be compressible along the first direction.

Therefore, the heat exchange plate can be adapted to a relatively small gap in the first direction, so that the heat exchange plate can not only be continuously attached to the battery cell to maintain relatively high heat exchange efficiency, but also reduce the impact of the production tolerances.

In some embodiments, the heat exchange assembly located in the second region is separately in contact with the first surface of the battery and the inner wall surface of the accommodating case.

Since the heat exchange assembly is separately in contact with the first surface and the inner wall surface of the accommodating case, the heat exchange assembly fully occupies the space of the accommodating cavity on the first surface, thereby achieving the mounting space required by the heat exchange assembly. The heat exchange assembly is limited between the first surface and the inner wall surface of the accommodating case, and the heat exchange assembly is attached to the first surface, so that the heat exchange assembly and the battery cell have relatively high heat exchange efficiency.

In some embodiments, in the accommodating cavity, the battery cell is a long blade battery cell, a plurality of long blade battery cells are arranged along the second direction to form a battery cell group, and the second direction is consistent with the width direction of the first surface; and in the battery cell group, the poles are arranged along the second direction, and the heat exchange assembly extends along the second direction.

By arranging the long blade battery cells along the second direction, the poles are arranged in a straight line along the second direction, so that the accommodating cavity on the sides of the poles has a relatively large and complete space, which meets the space requirement for mounting the heat exchange assembly. By disposing the heat exchange assembly in the space, the pole and the heat exchange assembly can make full use of the space of the accommodating cavity on the first surface. Since the long blade battery cells are arranged along the second direction and the heat exchange assembly extends along the second direction, the heat exchange assembly can cover the plurality of long blade battery cells to exchange heat with the long blade battery cells.

In some embodiments, in the accommodating cavity, the battery cell is a short blade battery cell, a plurality of battery cell units are arranged along the second direction to form a battery cell group, each battery cell unit comprises two or more short blade battery cells arranged side by side along a third direction, the second direction is consistent with the width direction of the first surface, and the third direction is consistent with the length direction of the first surface; two adjacent short blade battery cells along the third direction are arranged side by side in such a manner that the poles are close to each other or in such a manner that the poles are far away from each other; and in the battery cell group, the poles are arranged along the second direction, and the heat exchange assembly extends along the second direction.

Since the plurality of battery cell units are arranged along the second direction, and adjacent short blade battery cells along the third direction are arranged side by side in such a manner that the poles are close to or away from each other, the accommodating cavity on the first surfaces of the short blade battery cells has a relatively large and complete space, which can meet the space requirement for mounting the heat exchange assembly. Since the heat exchange assembly extends along the second direction, the heat exchange assembly can cover the plurality of short blade battery cells to exchange heat with the short blade battery cells.

In some embodiments, one side that is of the accommodating case and that faces the battery cell forms an accommodating portion, and the pole is at least partially accommodated in the accommodating portion.

By disposing the accommodating portion on the accommodating case, on the one hand, it is beneficial to adapting the shape of the space in the accommodating case to the contour shape formed by the poles, and is beneficial to lowering the requirement for the arrangement of the poles. On the other hand, it is beneficial to reducing the overall size and the volume of the accommodating case, improving the space utilization in the accommodating case, and reducing the overall volume of the battery, and contributes to improving the energy density of the battery.

In some embodiments, a busbar is disposed in the first region, the busbar is used for connecting the poles of the adjacent battery cells, and the busbar is at least partially accommodated in the accommodating portion.

Therefore, it is beneficial to better adapting the shape of the space in the accommodating case to the arrangement relationship between the busbar and the battery cell, so that the shape of the accommodating cavity can adapt to the shape of the battery cells, which is beneficial to reducing the gap between the inner wall of the accommodating case and the battery cell and improving the space utilization of the battery.

In some embodiments, the battery further comprises: an electrical kit, wherein the electrical kit is at least partially disposed in the first region, and the electrical kit located in the first region is at least partially accommodated in the accommodating portion.

Therefore, at least a part of the pole, at least a part of the busbar, and at least a part of the electrical kit are integrated in the first region; and the accommodating case is provided with the accommodating portion corresponding to the first region, which can accommodate more components protruding from the surface of the battery cell, thereby improving the utilization of the space in the accommodating portion. This is beneficial to reducing the gap between the inner wall of the accommodating cavity and the battery cell, and improving space utilization of the battery.

In some embodiments, the electrical kit comprises at least one of a sampling structure, a battery management system, a relay, and a high-voltage power distribution unit.

Therefore, at least one of the sampling structure, the battery management system, the relay and the high-voltage power distribution unit can be accommodated in the accommodating portion, thereby reducing the space of the accommodating cavity occupied by the original arrangement position of the at least one of the sampling structure, the battery management system, the relay, and the high-voltage power distribution unit. This is beneficial to reducing the gap between the inner wall of the accommodating cavity and the battery cell, and improving space utilization of the battery.

In some embodiments, the accommodating case has a boss, the boss is formed by the accommodating case protruding, along the first direction, in the direction away from the battery cell, one side that is of the boss and that faces the battery cell forms the accommodating portion, at least a part of the pole and at least a part of the electrical kit are located in the accommodating portion and leave a gap with the inner wall of the boss.

Since the boss is formed by the accommodating case protruding, along the first direction, in the direction away from the battery cell, and one side that is of the boss and that faces the battery cell forms the accommodating portion, the space of the accommodating portion can be increased by increasing the protruding height of the boss within a specific range, and the boss can be configured according to the size of components to be accommodated, accommodating as many components as possible in the accommodating portion, thereby reducing the space of the accommodating cavity occupied by the components. This is beneficial to reducing the gap between the inner wall of the accommodating cavity and the battery cell, and improving space utilization of the battery.

In some embodiments, the length direction of the boss is consistent with the second direction, the length of the boss along the second direction is greater than or equal to the length of the accommodating cavity along the second direction, and the second direction is consistent with the width direction of the first surface; or the length direction of the boss is consistent with the third direction, the length of the boss along the third direction is greater than or equal to the length of the accommodating cavity along the third direction, and the third direction is consistent with the length direction of the first surface.

Since the length of the boss along the second direction is greater than or equal to the length of the accommodating cavity along the second direction, the projection of the boss along the first direction covers the range of all the battery cells along the second direction, so that the poles of all the battery cells can be accommodated in the boss. Since the length of the boss along the third direction is greater than or equal to the length of the accommodating cavity along the third direction, the boss has a relatively large accommodating portion, which can accommodate a part of the poles and more electrical kits. This is beneficial to reducing the space occupied by the electrical kit and the like at other positions in the accommodating cavity, and improving space utilization of the battery.

In some embodiments, the length of the boss along the second direction or the third direction is not greater than 500 mm.

Therefore, on one hand, it is beneficial to enabling the surface of the accommodating case to have a relatively large flat region, to adapt to other components in the electric device, and to reduce the adverse effects of the boss on the arrangement of other components in the electric device. On the other hand, it reduces the adverse effects of the reduced structural strength of the boss due to the large size, and lowers the probability that the boss deforms and thereby damages the components in the accommodating portion.

In some embodiments, the length of the boss along the second direction or the third direction is within the range of 50 mm to 300 mm.

Therefore, the space in the accommodating portion can accommodate components protruding from the battery cells, and the accommodating case can maintain sufficient structural strength.

In some embodiments, a protrusion is disposed in the first region of the battery cell, the pole is disposed on the surface of one side that is of the protrusion and that faces the first direction, and at least a part of the protrusion is located in the accommodating portion.

By disposing the protrusion in the first region of the battery cell and disposing the pole on the protrusion, the pole is isolated from the second region, and the heat exchange assembly located in the second region and the pole do not interfere with each other, thereby reducing the risk of electrical connectivity between the pole and the heat exchange assembly. The height of the pole in the first direction can be increased without reducing the strength of the pole, which is convenient for providing a heat exchange assembly accommodating space with a suitable height as required.

In some embodiments, the pole comprises a positive electrode pole and a negative electrode pole, and the positive electrode pole and the negative electrode pole are spaced apart from each other on the protrusion.

By disposing the positive electrode pole and the negative electrode pole to be spaced apart from each other on the protrusion, the positive electrode pole and the negative electrode pole are relatively independent and do not interfere with each other, thereby reducing the risk of a short circuit between the two.

In some embodiments, there is one protrusion, the positive electrode pole and the negative electrode pole are spaced apart from each other on the protrusion, and the connecting line between the positive electrode pole and the negative electrode pole is parallel to the length direction of the first surface, or the connecting line between the positive electrode pole and the negative electrode pole is parallel to the width direction of the first surface.

Since the positive electrode pole and the negative electrode pole are arranged on the same protrusion, only one protrusion needs to be manufactured to provide mounting positions for the two electrode poles, which is beneficial to reducing manufacturing steps of a first housing wall and reducing production costs. By arranging the positive electrode pole and the negative electrode pole in such a manner that the connecting line between the two is parallel to the length direction of the first surface, or arranging the positive electrode pole and the negative electrode pole in such a manner that the connecting line between the two is parallel to the width direction of the first surface, the arrangement is relatively regular, which facilitates later maintenance. Moreover, since the area of the protrusion for disposing the two electrode poles can be designed to be greater than the area of the protrusion for disposing the single electrode pole, it contributes to improving the strength of the position where the electrode pole is disposed in the battery cell.

In some embodiments, at least two protrusions are spaced apart from each other, the positive electrode pole is disposed on one of the protrusions, and the negative electrode pole is disposed on the other of the protrusions.

Since the at least two protrusions are provided, and the positive electrode pole and the negative electrode pole are respectively arranged on different protrusions, on the one hand, it is beneficial to reducing the volume of the single protrusion, so that the structure is more compact, and it is beneficial to reduce the volume of the battery. On the other hand, there is a relatively large distance between the positive electrode pole and the negative electrode pole, so that the two can be relatively independent and do not interfere with each other, thereby reducing the risk of a short circuit between the two.

In some embodiments, the length direction of the first surface, the length direction of the protrusion, and the third direction are consistent, and along the third direction, the length of the protrusion is 10% to 30% of the length of the battery cell.

Along the third direction, since the ratio of the length of the protrusion to the length of the battery cell is greater than or equal to 10%, the positive electrode pole and the negative electrode pole have a sufficient safety distance therebetween after being disposed on the same protrusion, thereby reducing the risk of a short circuit between the two. Along the third direction, since the ratio of the length of the protrusion to the length of the battery cell is less than or equal to 30%, not less than 70% of the length of the battery cell along the third direction can be reserved for the heat exchange assembly, thereby providing a sufficient mounting space for the heat exchange assembly.

In some embodiments, along the third direction, the distance between the center point of the protrusion and the center point of the first surface is 0% of the length of the battery cell, or the distance between the center point of the protrusion and the center point of the first surface is within the range of 45% to 47.5% of the length of the battery cell.

Along the third direction, since the distance between the center point of the protrusion and the center point of the first surface is 0% of the length of the battery cell, sufficient spaces are reserved on two sides of the protrusion in the third direction for disposing the heat exchange assemblies. Along the third direction, since the distance between the center point of the protrusion and the center point of the first surface is within the range of 45% to 47.5% of the length of the battery cell, a sufficient space is reserved on one side of the protrusion for disposing the heat exchange assembly.

In some embodiments, along the first direction, the height of the pole, disposed on the protrusion, from the first surface of the battery is greater than or equal to the height of the heat exchange assembly, and a gap is reserved between the protrusion, the pole, the electrical kit, and the inner wall surface of the boss.

Therefore, the protrusion, the pole, and the electrical kit are not compressed by the inner wall surface of the boss when being placed in the accommodating portion.

In some embodiments, the accommodating case is provided with a through hole that allows the first region to be opened to the outside, and a detachable closing cover is disposed at the through hole; and the projection of the through hole along the first direction and the projection of the first region along the first direction have an overlapping portion.

Since the accommodating case is provided with the through hole, the inside of the battery can be in communication with the outside, so that the maintenance personnel can perform internal maintenance of the battery through the through hole. By detachably mounting the closing cover at the through hole, the closing cover can close the through hole when being mounted at the through hole, isolating the accommodating cavity from the outside, thereby allowing the battery cell to operate in a stable environment. When the closing cover is detached from the through hole, the inside of the battery is in communication with the outside through the through hole for internal maintenance of the battery. Since the projection of the through hole along the first direction and the projection of the first region along the first direction have the overlapping portion, the maintenance personnel can directly access at least a part of the pole through the through hole.

In some embodiments, a sealing member is disposed around the through hole, and the sealing member is used for sealing between the through hole and the closing cover.

Therefore, the closing cover and the through hole can maintain a relatively tight sealing effect, preventing external dust and liquid from entering the accommodating cavity and damaging the battery cell.

In some embodiments, the closing cover is configured as a flat plate; or the closing cover is configured to be convex relative to the surface of the accommodating case, one side that is of the closing cover and that faces the battery cell forms the accommodating portion, and at least a part of the pole is located in the accommodating portion via the through hole.

By configuring the closing cover as the flat plate, the structure is simple, and the processing of the closing cover is facilitated. Since the closing cover is configured to be convex relative to the surface of the accommodating case, and one side that is of the closing cover and that faces the battery cell forms the accommodating portion, at least a part of the pole is placed in the accommodating portion of the closing cover, so that the space occupied by the pole in the accommodating cavity is reduced, which contributes to reducing the volume of the accommodating case.

In some embodiments, the through hole is provided on the wall surface that is of the boss and that faces the battery cell.

Therefore, the accommodating portion of the closing cover and the accommodating portion of the boss are superimposed to form a relatively large space, which can accommodate more poles and even electrical kits, or the like, and further reduce the space of the accommodating cavity occupied by the portion of the battery cell protruding from the surface. The through hole connects the accommodating portion of the boss to the outside, and the maintenance personnel can maintain the components such as the pole in the accommodating portion through the through hole.

According to a second aspect, the present disclosure further provides an electric device, comprising the foregoing battery, and the battery serves as a power source of the electric device.

Since the electric device comprises the battery that fully utilizes the internal space of the accommodating case, the space reserved by the electric device for the battery can be reduced, or the overall energy of the battery can be increased without reducing the volume, thereby contributing to improving the degree of freedom of arrangement of the battery and the surrounding structure thereof in the electric device, and contributing to improving the endurance/standby capability of the electric device.

In some embodiments, the plurality of battery cells are arranged along the second direction to form a battery cell queue, and the second direction is consistent with the width direction of the first surface; the surface of the accommodating case is configured to have a boss extending along the second direction, and the boss is formed by the surface of the accommodating case protruding, along the first direction, in the direction away from the battery cell; the electric device is a vehicle, the vehicle further comprises at least one seat, the battery is located on the side of the seat along the up-down direction of the vehicle, the through hole of the battery faces the other side of the up-down direction of the vehicle, the up-down direction of the vehicle is consistent with the first direction, and the first direction is perpendicular to the second direction; and the projection of the seat on the battery along the up-down direction of the vehicle is located outside the range of the boss.

Since the surface of the accommodating case is provided with the boss, the boss can provide an additional space to accommodate components in the battery, which is beneficial to reducing space required by the battery, or can increase the overall energy of the battery without reducing the volume, thereby contributing to improving the endurance mileage of the vehicle. Since the projection of the seat on the battery along the up-down direction of the vehicle is located outside the range of the boss, the seat and the boss make full use of the same horizontal space, which improves the space utilization in the vehicle and has less mutual interference. Since the battery is located on one side of the seat along the up-down direction of the vehicle, and the through hole of the battery faces the other side in the up-down direction of the vehicle, battery maintenance can be performed in the vehicle without disassembling the battery, thereby saving time and effort.

In some embodiments, the vehicle comprises at least one seat row, the seat row comprises at least two seats arranged along the left-right direction of the vehicle, the left-right direction of the vehicle is the third direction, and the third direction is perpendicular to both the first direction and the second direction; and along the left-right direction of the vehicle, the boss is located between adjacent seats in the same seat row, and/or the bosses are located on two sides of the same seat row in the left-right direction of the vehicle.

Therefore, the seat is not affected by the protrusion when the seat is adjusted forward or backward. Moreover, the arrangement position of the boss is staggered from the use position of a user, which reduces the interference of the boss on the normal activities of the user in the vehicle, improves the user experience, and improves the space utilization in the vehicle.

In some embodiments, the battery cells are arranged along the second direction and the third direction to form a battery cell array; when the number of the battery cells arranged along the third direction is greater than the number of the battery cells arranged along the second direction, the number of the battery cells arranged along the second direction is not more than 2; and when the number of the battery cells arranged along the third direction is less than the number of the battery cells arranged along the second direction, the number of the battery cells arranged along the third direction is not more than 4.

Therefore, the size of the battery does not exceed the size of a conventional vehicle chassis, enabling the battery to be compatible with most vehicles.

According to a third aspect, the present disclosure further provides an energy storage device, comprising the foregoing battery, and the battery is configured to be capable of storing and providing electrical energy.

Since the energy storage device comprises the battery that fully utilizes the internal space of the battery case, the space reserved by the energy storage device for the battery can be reduced, or the overall energy of the battery can be increased without reducing the volume, thereby contributing to reducing the space required to be occupied by the energy storage device or increase the energy storage capacity.

### BRIEF DESCRIPTION OF THE DRAWINGS

FIG. 1 is an exploded view of a battery with a pole in the middle of a battery cell according to an embodiment of the present disclosure;
FIG. 2 is a partially enlarged view of a portion A in FIG. 1 according to an embodiment of the present disclosure;
FIG. 3 is an exploded side view of a battery with a pole in the middle of a battery cell according to an embodiment of the present disclosure;
FIG. 4 is a top view of a battery with a pole in the middle of a battery cell according to an embodiment of the present disclosure;
FIG. 5 is a cross-sectional view of FIG. 4 along B-B according to an embodiment of the present disclosure;
FIG. 6 is a partially enlarged view of a portion C in FIG. 5 according to an embodiment of the present disclosure;
FIG. 7 is a schematic diagram of a long blade battery cell with a pole in the middle according to an embodiment of the present disclosure;
FIG. 8 is a schematic diagram of a long blade battery cell with poles on two sides according to an embodiment of the present disclosure;
FIG. 9 is a schematic diagram of short blade battery cells arranged side by side in such a manner that poles are away from each other according to an embodiment of the present disclosure;
FIG. 10 is a schematic diagram of short blade battery cells arranged side by side in such a manner that poles are close to each other according to an embodiment of the present disclosure;
FIG. 11 is an exploded view of a battery with poles on two sides of the battery cell according to an embodiment of the present disclosure;
FIG. 12 is a partially enlarged view of a portion D in FIG. 11 according to an embodiment of the present disclosure;
FIG. 13 is a top view of a battery with poles on two sides of a battery cell according to an embodiment of the present disclosure;
FIG. 14 is a cross-sectional view of FIG. 13 along E-E according to an embodiment of the present disclosure;
FIG. 15 is a partially enlarged view of a portion F in FIG. 14 according to an embodiment of the present disclosure;
FIG. 16 is an exploded view of a heat exchange assembly according to an embodiment of the present disclosure;
FIG. 17 is an exploded view of a heat exchange plate according to an embodiment of the present disclosure;
FIG. 18 is a three-dimensional exploded view of a battery with a boss in the middle of an accommodating case according to an embodiment of the present disclosure;
FIG. 19 is a top view of a battery with a boss in the middle of an accommodating case according to an embodiment of the present disclosure;
FIG. 20 is a cross-sectional view of FIG. 19 along G-G according to an embodiment of the present disclosure;
FIG. 21 is a partially enlarged view of a portion H in FIG. 20 according to an embodiment of the present disclosure;
FIG. 22 is a three-dimensional exploded view of a battery with bosses on the two sides of an accommodating case according to an embodiment of the present disclosure;
FIG. 23 is a top view of a battery with bosses on the two sides of an accommodating case according to an embodiment of the present disclosure;
FIG. 24 is a cross-sectional view of FIG. 23 along I-I according to an embodiment of the present disclosure;
FIG. 25 is a partially enlarged view of a portion J in FIG. 24 according to an embodiment of the present disclosure;
FIG. 26 is a three-dimensional exploded view of an accommodating case provided with a through hole and a closing cover according to an embodiment of the present disclosure;
FIG. 27 is a three-dimensional exploded view of a boss provided with a through hole and a closing cover according to an embodiment of the present disclosure;
FIG. 28 is a schematic diagram of a convex closing cover according to an embodiment of the present disclosure;
FIG. 29 is a schematic diagram of a battery, provided with a boss, mounted on a vehicle according to an embodiment of the present disclosure;
FIG. 30 is a schematic diagram of FIG. 29 according to an embodiment of the present disclosure from another perspective;
FIG. 31 is a top view of a battery, provided with a boss, mounted on a vehicle according to an embodiment of the present disclosure; and
FIG. 32 is a cross-sectional view of FIG. 31 along K-K according to an embodiment of the present disclosure.

### Description of numeral numbers

10: battery cell; 101: pole; 102: protrusion; 103: first surface; 1031: first region; 1032: second region; 11: accommodating case; 111: boss; 112: closing cover; 113: through hole; 114: sealing member; 12: busbar; 13: electrical kit; 14: heat exchange assembly; 141: heat exchange plate; 1411: flow channel; 142: adhesive layer; 1421: first adhesive layer; 1422: second adhesive layer; 15: seat; X: first direction (up-down direction of a vehicle); Y: second direction; Z: third direction (left-right direction of a vehicle).

### DETAILED DESCRIPTION OF PREFERRED EMBODIMENTS

It should be noted that, without contradiction, the embodiments in the present disclosure may be combined with the technical features in the embodiments, and the detailed description in the specific embodiments should be understood as an explanation of the purpose of the present disclosure, and should not be regarded as an improper limitation to the present disclosure.

Unless otherwise defined, all technical and scientific terms used herein have the same meaning as commonly understood by a person skilled in the art to which the present disclosure belongs; the terms used herein are merely for the purpose of describing specific embodiments and are not intended to limit the present disclosure; and the terms "include/comprise", "be provided with", and any other variants thereof in the specification, and accompanying drawings of the present disclosure are intended to cover a non-exclusive inclusion.

Currently, new energy batteries are becoming more and more widely used in life and industry. New energy batteries are used not only in energy storage power systems such as hydropower, thermal power, wind power, and solar power plants, but also widely used in electric vehicles such as electric bicycles, electric motorcycles, and electric automobiles, as well as aerospace, and many other fields.

The vehicle may be a fuel vehicle, a gas vehicle, or a new energy vehicle, and the new energy vehicle may be a battery electric vehicle, a hybrid vehicle, or a range-extended electric vehicle. In the vehicle, a battery is provided, which may be disposed at the bottom, head, or tail of the vehicle. The battery may be used for powering the vehicle, for example, the battery may be used as an operating power source of the vehicle. The vehicle may further include a controller and a motor, where the controller is used for controlling the battery to power the motor, for example, for an operating power requirement of the vehicle during starting, navigating, and driving.

In some embodiments of the present disclosure, the battery may be used not only as the operating power source of the vehicle, but also as a driving power source of the vehicle, instead of, or partially instead of, fuel or natural gas, to provide driving power for the vehicle.

In the embodiments of the present disclosure, the battery may be a battery cell. A battery cell is a fundamental unit capable of achieving conversion between chemical energy and electrical energy, and can be used to manufacture a battery module or a battery pack, so as to supply power to an electrical device. A battery cell may be a secondary battery, a secondary battery is a battery cell that may be continuously used by activating an active material by means of charging the battery cell after the battery cell is discharged. The battery cell may be a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead-acid battery, or the like, which is not limited in the embodiments of the present disclosure.

The battery cell generally includes an electrode assembly. The electrode assembly includes a positive electrode, a negative electrode, and a spacer. During charging and discharging of the battery cell, intercalation/de-intercalation of active ions (e.g., lithium ions) are enabled at the positive electrode and negative electrode by moving the active ions between the positive electrode and negative electrode. The spacer is arranged between the positive electrode and the negative electrode to prevent the positive and negative electrodes from being short-circuited and to allow active ions to pass therethrough.

In some embodiments, the battery cell further includes an electrolyte that functions to conduct ions between the positive electrode and the negative electrode. The type of the electrolyte is not particularly limited in the present disclosure, and may be selected according to a requirement. The electrolyte may be liquid, gel, or solid.

In some embodiments, the battery cell may include a housing. The housing is used to enclose components such as the electrode assembly and the electrolyte. The housing may be a steel casing, an aluminum casing, a plastic casing (e.g., polypropylene), a composite metal casing (e.g., a copper-aluminum composite casing), an aluminum plastic film, or the like.

As an example, the battery cell may be a cylindrical battery cell, a prismatic battery cell, a pouch battery cell, or a battery cell of other shapes, and the prismatic battery cell includes a square-housing battery cell, a blade-shaped battery cell, and a multi-prism battery cell, for example, a hexagonal battery cell, and the like, which is not particularly limited in the present disclosure.

In some embodiments, the housing includes an end cover and a housing body. The housing body is provided with an opening, and the end cover seals the opening to form a sealed space for accommodating substances such as the electrode assembly and the electrolyte. The housing body may be provided with one or more openings. One or more end covers may also be provided.

In the embodiments of the present disclosure, the battery may be a single physical module (such as a battery module or battery pack) including one or a plurality of battery cells to provide a higher voltage and capacity. When there are a plurality of battery cells, the plurality of battery cells are connected in series, in parallel, or in series-parallel via a busbar.

As an example, the battery cell may be a cylindrical battery cell, a prismatic battery cell, a pouch battery cell, or a battery cell of other shapes, and the prismatic battery cell includes a square-housing battery cell, a blade-shaped battery cell, and a multi-prism battery cell, for example, a hexagonal battery cell, and the like, which is not particularly limited in the present disclosure.

In the embodiments of the present disclosure, the battery may be a single physical module (such as a battery module or battery) including one or a plurality of battery cells to provide a higher voltage and capacity. When there are a plurality of battery cells, the plurality of battery cells are connected in series, in parallel, or in series-parallel via a busbar.

In the description of the embodiments of the present disclosure, the technical terms "first", "second", "third", and the like are used only for distinguishing between different objects, but cannot be construed to indicate or imply relative importance or implicitly indicate the number, specific order, or primary/secondary relationship of indicated technical features. In the description of the embodiments of the present disclosure, "plurality of" means two or more unless specifically defined otherwise.

Reference to "embodiment" herein means that a particular feature, structure, or characteristic described with reference to the embodiment can be included in at least one embodiment of the present disclosure. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present disclosure, the term "and/or" is only an associative relationship for describing associated objects, indicating that three relationships may be present. For example, A and/or B may indicate the following three cases: presence of only A, presence of both A and B, and presence of only B. In addition, the character "/" herein generally indicates that associated objects are in an "or" relationship.

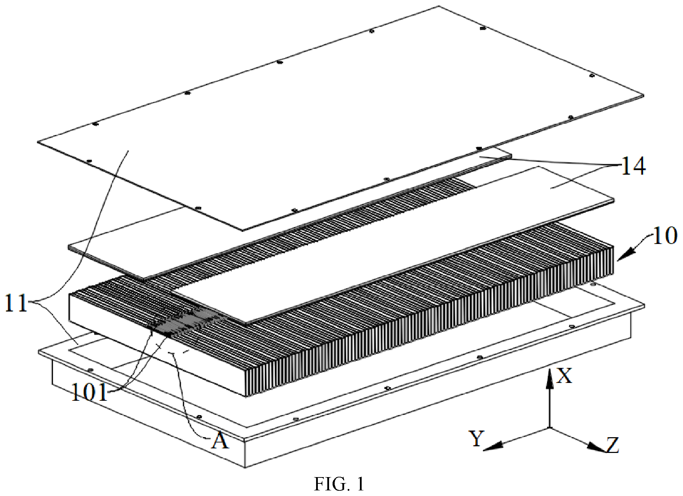

In the description of the embodiments of the present disclosure, for ease of description, as shown by the arrows in FIG. 1, the direction of an arrow X is taken as a first direction, the direction of an arrow Y is taken as a second direction and the width direction of a first surface, and the direction of an arrow Z is taken as a third direction and the length direction of the first surface. When the battery is mounted on a vehicle, the direction of the arrow X is also the up-down direction of the vehicle, and the direction of the arrow Z is also the left-right direction of the vehicle, and the direction in which the arrow X is directed along the vertical direction is referred to as "up" and the opposite direction thereof is referred to as "down".

In the description of the embodiments of the present disclosure, unless otherwise specified and defined explicitly, the terms "mount", "connect", "join", and "fasten" should be understood in a broad sense. For example, they may refer to a fixed connection, a detachable connection, or an integral connection, may refer to a mechanical connection or electrical connection, and may refer to a direct connection, an indirect connection via an intermediate medium, or an internal communication between two elements or interaction between two elements. A person of ordinary skill in the art may understand the specific meanings of the foregoing terms in the embodiments of the present disclosure according to specific situations.

In the description of the embodiments of the present disclosure, unless otherwise specified and defined, the technical term "contact" should be understood in a broad sense, which may be direct contact, or contact via an intermediate medium layer, or contact with substantially no interaction between two in contact with each other, or contact with an interaction force between two in contact with each other.

The following describes the embodiments of the present disclosure in detail.

With the promotion and popularization of the green development concept, new energy batteries are being used more and more widely in daily life and industry. For example, new energy vehicles equipped with batteries have already been widely used. In addition, batteries are also increasingly used in the field of energy storage or the like.

A battery continuously releases heat during operation, causing the temperature in the battery to rise. High temperature not only affects the operation efficiency of the battery, but also causes safety hazards. Therefore, in addition to a battery cell, the battery is further provided with a heat exchange assembly, so that the battery can operate at an appropriate temperature.

How to integrate the heat exchange assembly into the battery is one of issues of concern in the industry.

The inventors of the present disclosure hope to develop a structure that can improve the space utilization in a battery, thereby facilitating the reduction of the volume of the accommodating case of the battery and the improvement of the energy density of the battery.

Based on such a design concept, the inventors of the present disclosure design a battery, including at least one battery cell, where each battery cell has a pole on a first surface on one side in a first direction; an accommodating case, where an accommodating cavity is provided in the accommodating case, and each battery cell is accommodated in the accommodating cavity; and a heat exchange assembly, provided on the first surface of the battery cell and used for exchanging heat with each battery cell, where the projection of the pole along the first direction within the first surface does not overlap the projection of the heat exchange assembly along the first direction within the first surface.

Since both the pole and the heat exchange assembly are provided on the first surface, and the projection of the pole along the first direction does not overlap the projection of the heat exchange assembly along the first direction, the pole and the heat exchange assembly share the horizontal space between the first surface and the wall surface of the accommodating case, thereby improving the space utilization in the accommodating cavity, which not only contributes to reducing the size of the battery, but also contributes to improving the energy density of the battery. Since the battery cell and the heat exchange assembly are accommodated in the accommodating cavity of the accommodating case, the accommodating case can protect the battery cell and the heat exchange assembly. Since the heat exchange assembly is disposed on the first surface of the battery cell, the heat exchange assembly can exchange heat with the battery cell.

The following provides descriptions with reference to the accompanying drawings.

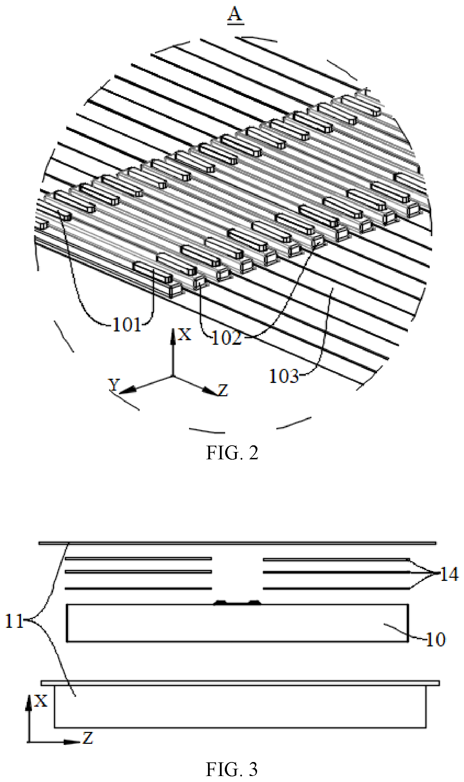

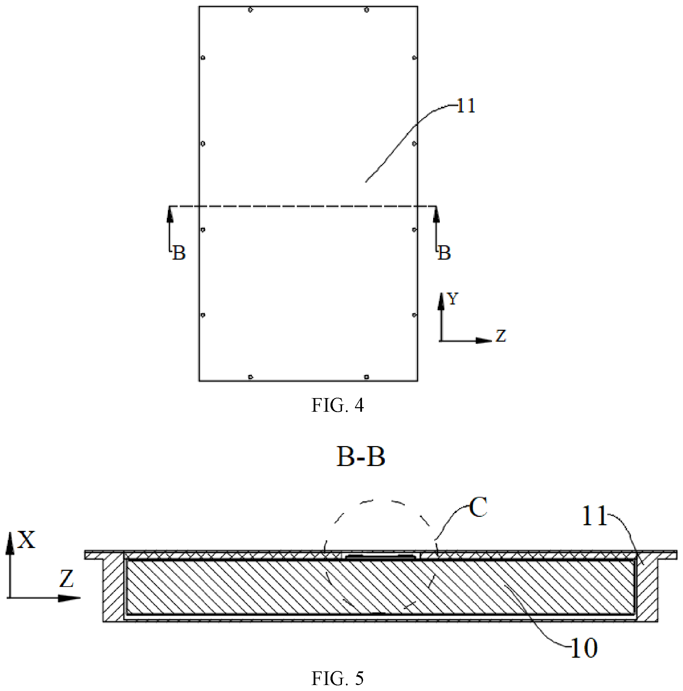

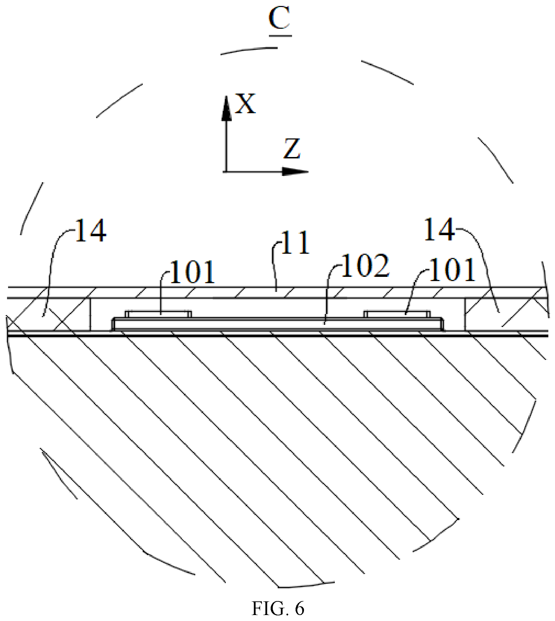

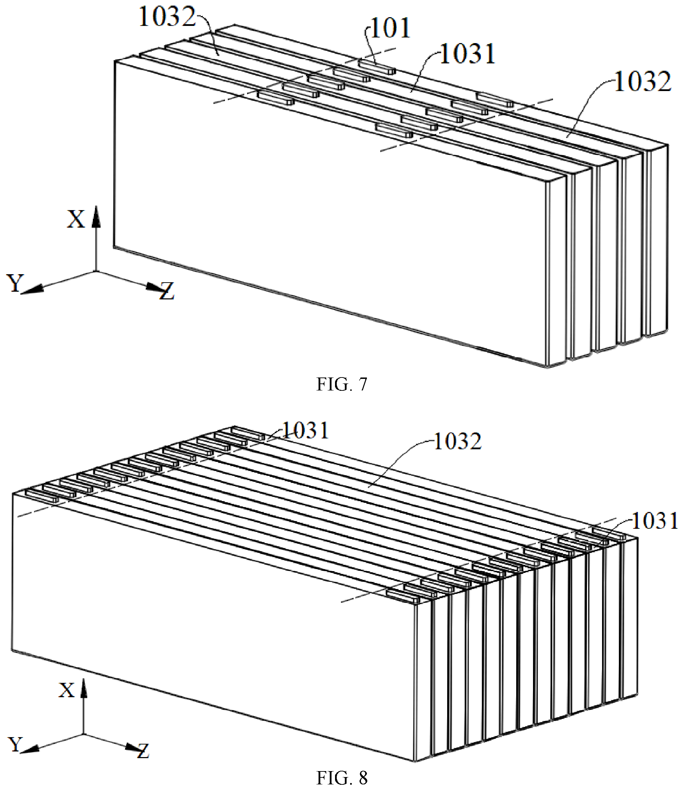

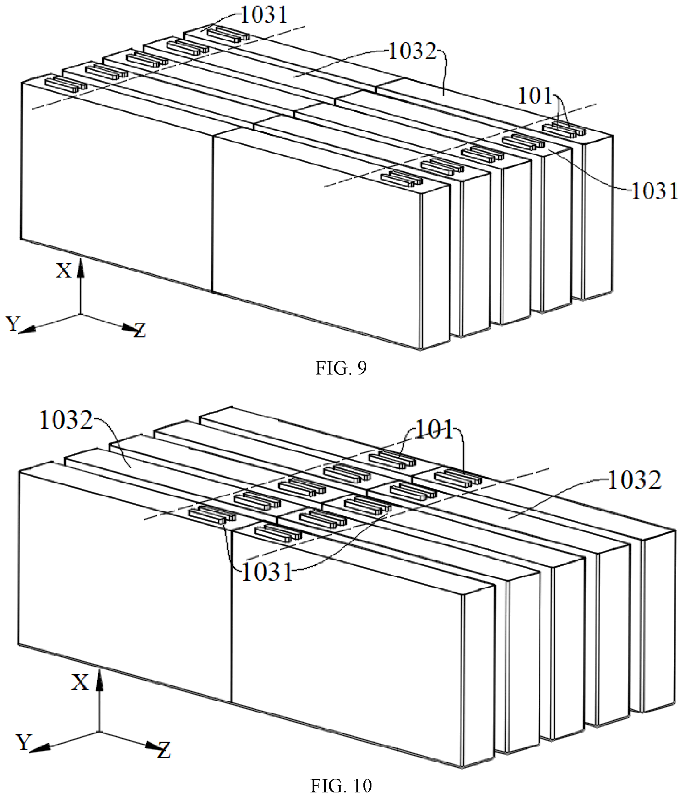

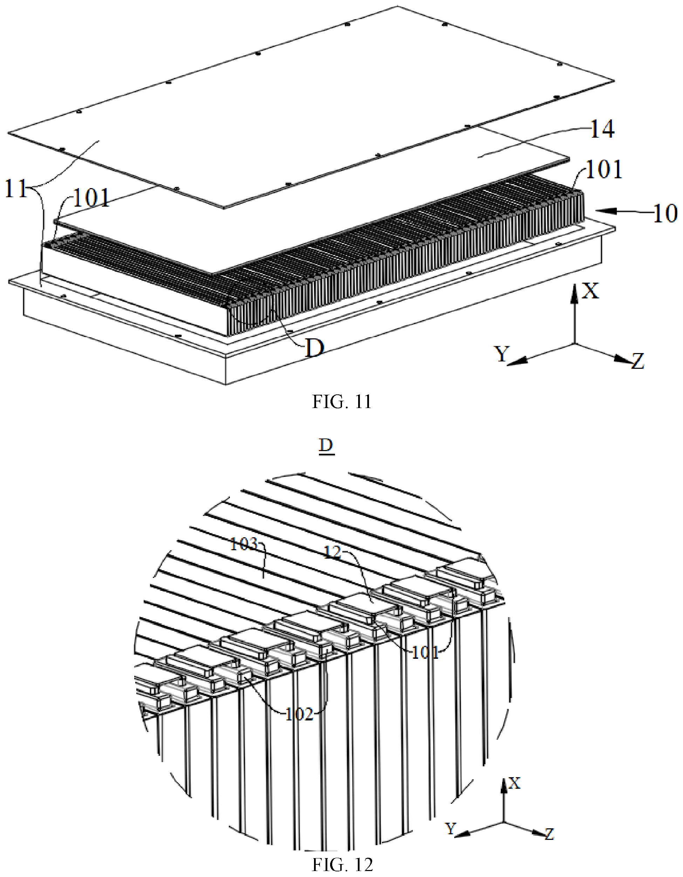

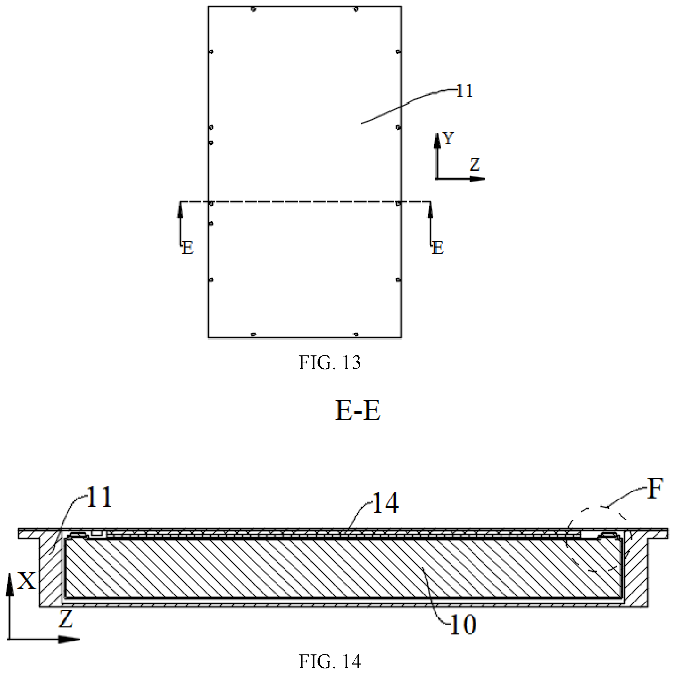

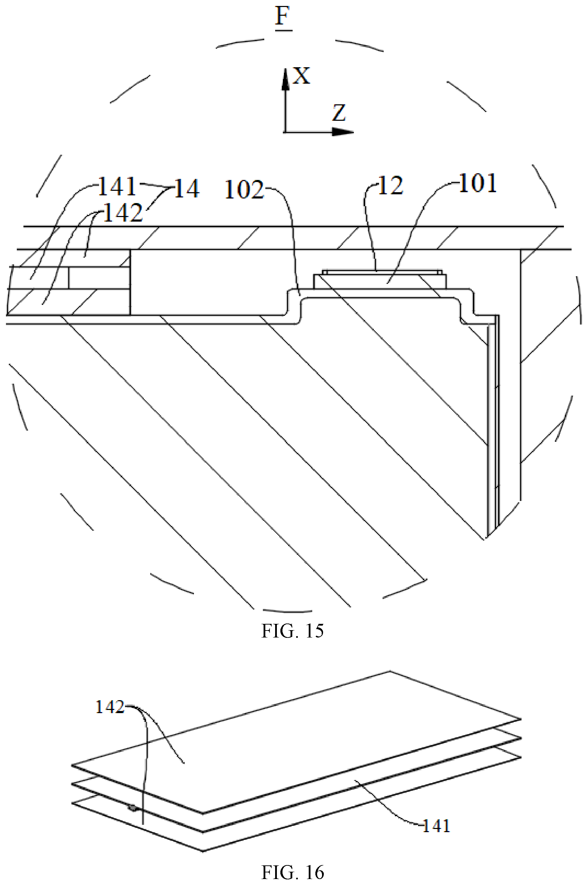

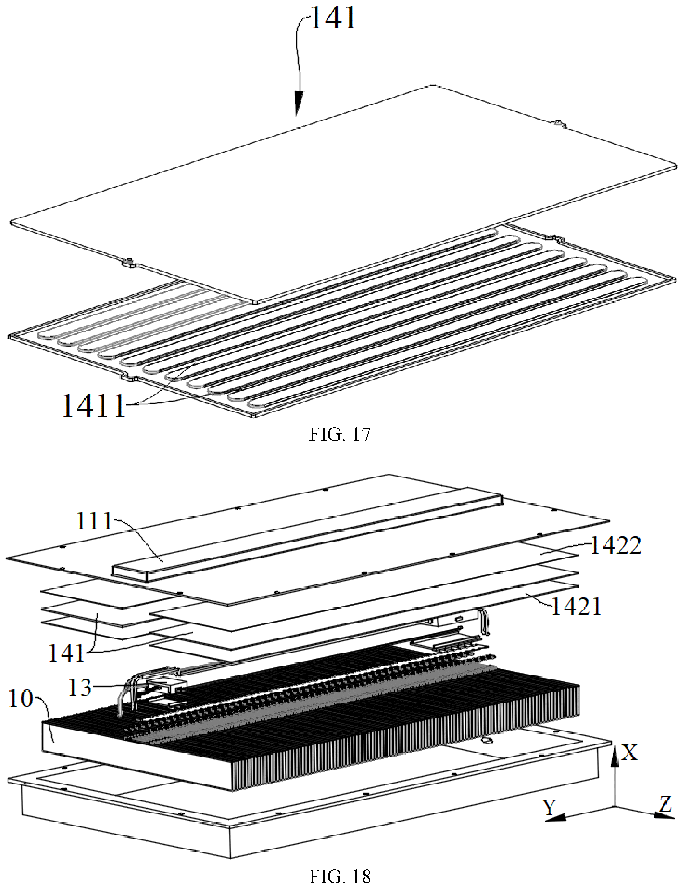

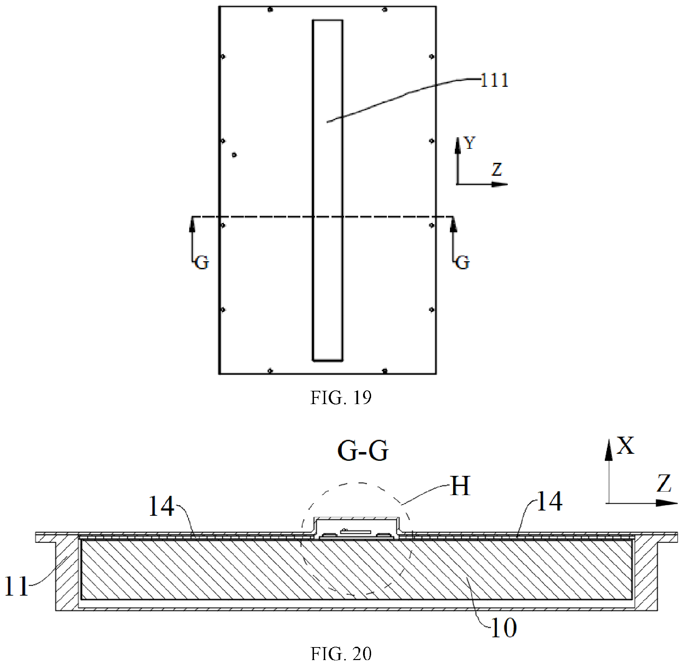

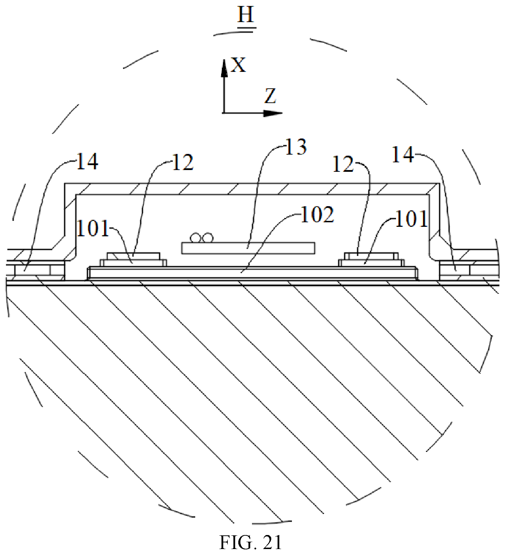

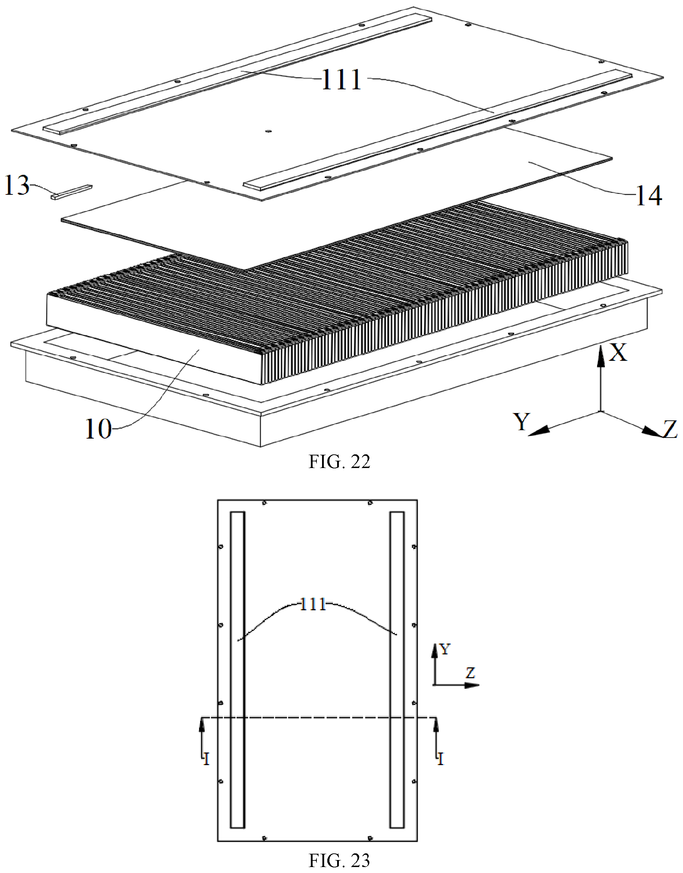

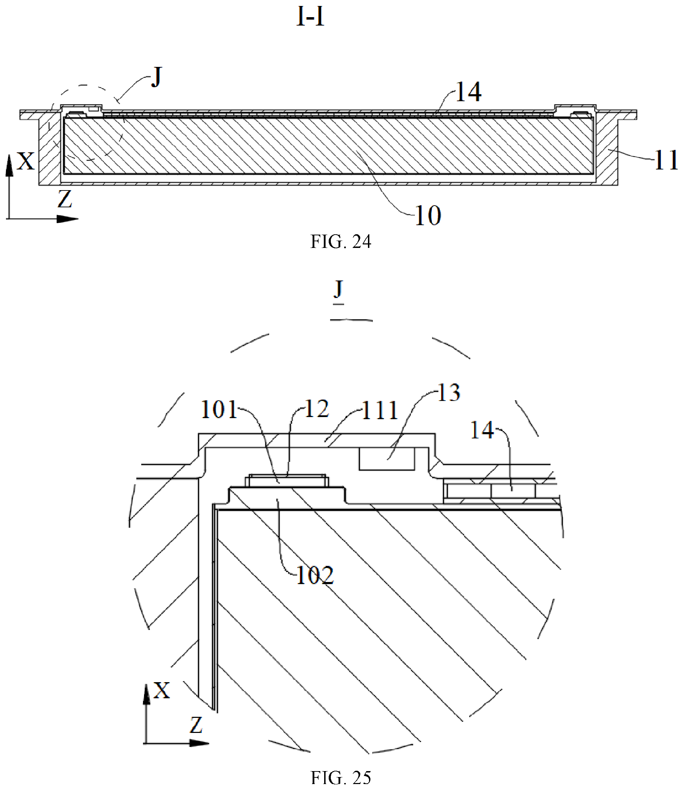

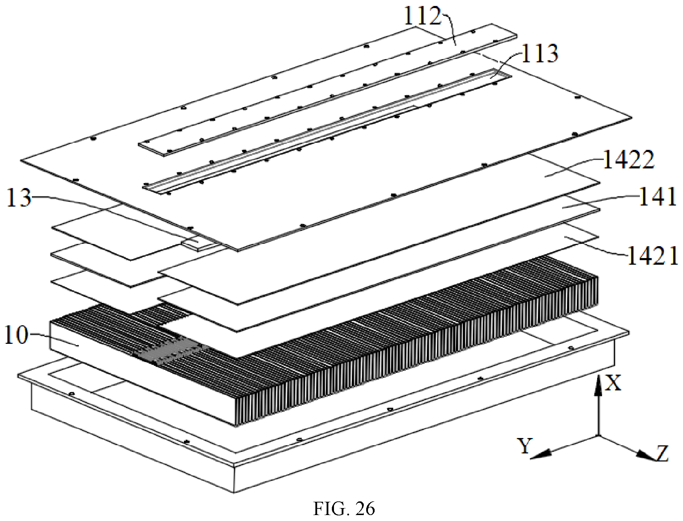

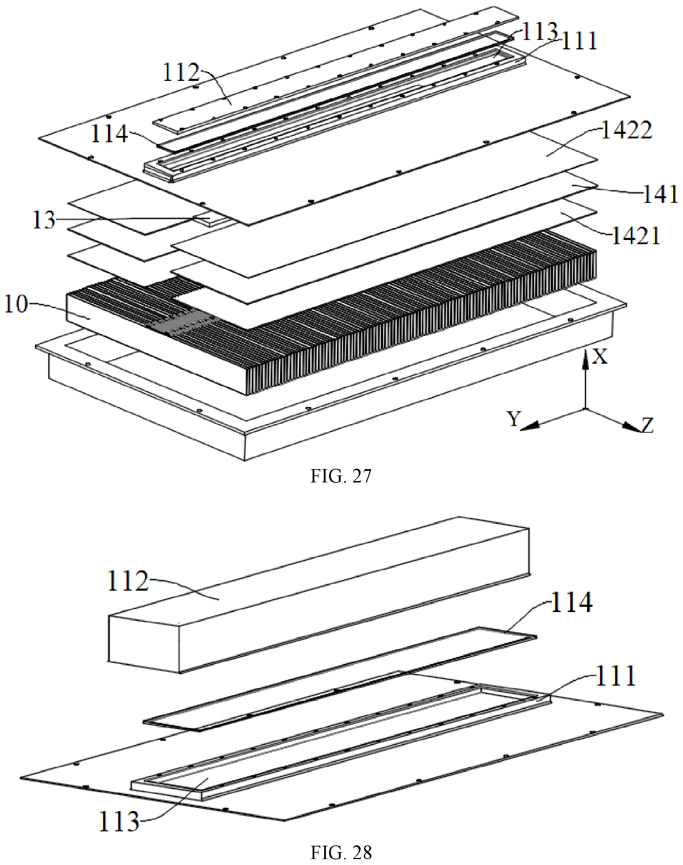

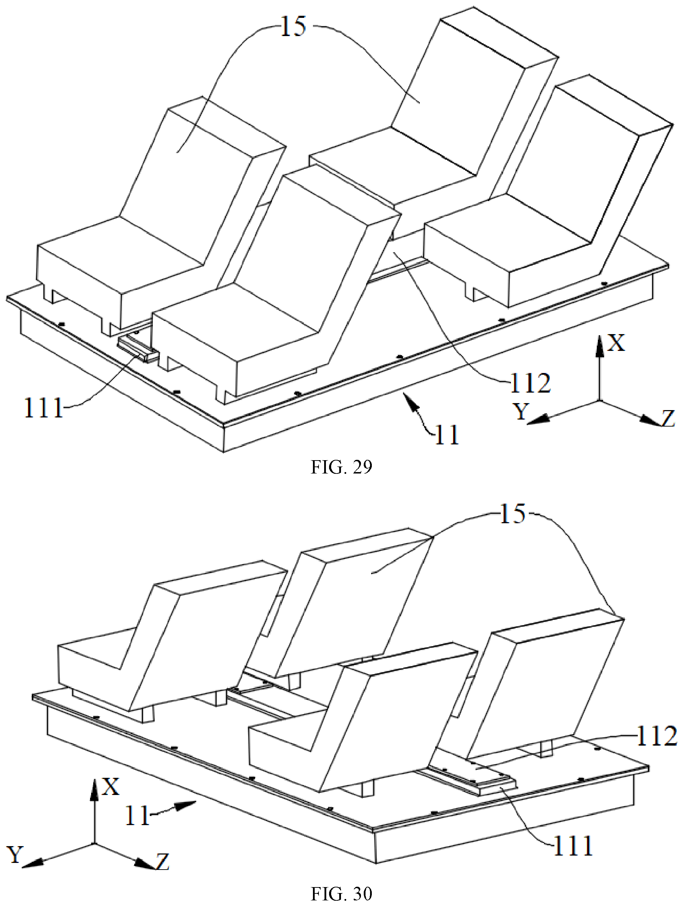

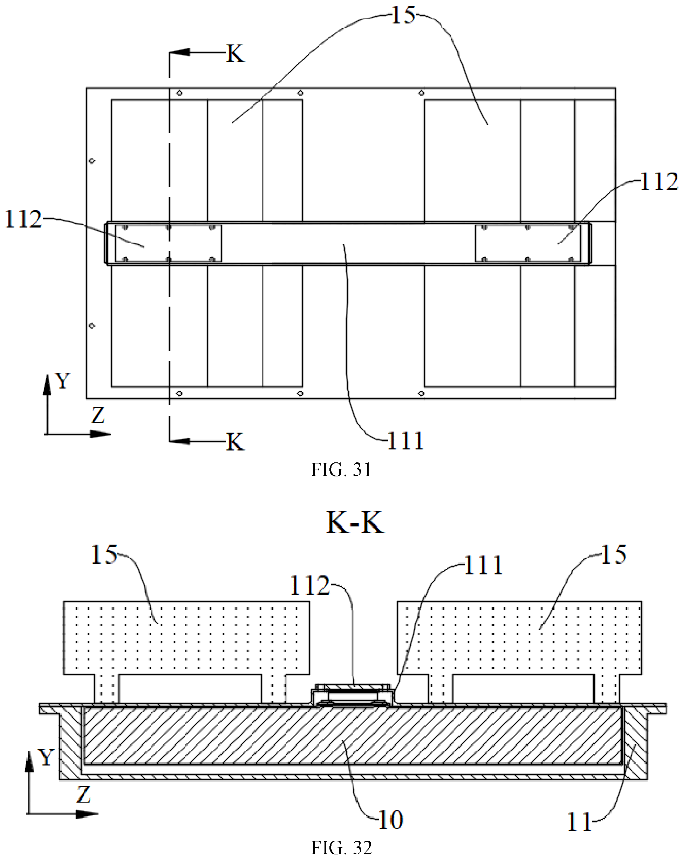

FIG. 1 is an exploded view of a battery with a pole in the middle of a battery cell according to an embodiment of the present disclosure; FIG. 2 is a partially enlarged view of a portion A in FIG. 1 according to an embodiment of the present disclosure; FIG. 3 is an exploded side view of a battery with a pole in the middle of a battery cell according to an embodiment of the present disclosure; FIG. 4 is a top view of a battery with a pole in the middle of a battery cell according to an embodiment of the present disclosure; FIG. 5 is a cross-sectional view of FIG. 4 along B-B according to an embodiment of the present disclosure; FIG. 6 is a partially enlarged view of a portion C in FIG. 5 according to an embodiment of the present disclosure; FIG. 7 is a schematic diagram of a long blade battery cell with a pole in the middle according to an embodiment of the present disclosure; FIG. 8 is a schematic diagram of a long blade battery cell with poles on two sides according to an embodiment of the present disclosure; FIG. 9 is a schematic diagram of short blade battery cells arranged side by side in such a manner that poles are away from each other according to an embodiment of the present disclosure; FIG. 10 is a schematic diagram of short blade battery cells arranged side by side in such a manner that poles are close to each other according to an embodiment of the present disclosure; FIG. 11 is an exploded view of a battery with poles on two sides of the battery cell according to an embodiment of the present disclosure; FIG. 12 is a partially enlarged view of a portion D in FIG. 11 according to an embodiment of the present disclosure; FIG. 13 is a top view of a battery with poles on two sides of a battery cell according to an embodiment of the present disclosure; FIG. 14 is a cross-sectional view of FIG. 13 along E-E according to an embodiment of the present disclosure; FIG. 15 is a partially enlarged view of a portion F in FIG. 14 according to an embodiment of the present disclosure; FIG. 16 is an exploded view of a heat exchange assembly according to an embodiment of the present disclosure; FIG. 17 is an exploded view of a heat exchange plate according to an embodiment of the present disclosure; FIG. 18 is a three-dimensional exploded view of a battery with a boss in the middle of an accommodating case according to an embodiment of the present disclosure; FIG. 19 is a top view of a battery with a boss in the middle of an accommodating case according to an embodiment of the present disclosure; FIG. 20 is a cross-sectional view of FIG. 19 along G-G according to an embodiment of the present disclosure; FIG. 21 is a partially enlarged view of a portion H in FIG. 20 according to an embodiment of the present disclosure; FIG. 22 is a three-dimensional exploded view of a battery with bosses on the two sides of an accommodating case according to an embodiment of the present disclosure; FIG. 23 is a top view of a battery with bosses on the two sides of an accommodating case according to an embodiment of the present disclosure; FIG. 24 is a cross-sectional view of FIG. 23 along I-I according to an embodiment of the present disclosure; FIG. 25 is a partially enlarged view of a portion J in FIG. 24 according to an embodiment of the present disclosure; FIG. 26 is a three-dimensional exploded view of an accommodating case provided with a through hole and a closing cover according to an embodiment of the present disclosure; FIG. 27 is a three-dimensional exploded view of a boss provided with a through hole and a closing cover according to an embodiment of the present disclosure; FIG. 28 is a schematic diagram of a convex closing cover according to an embodiment of the present disclosure; FIG. 29 is a schematic diagram of a battery, provided with a boss, mounted on a vehicle according to an embodiment of the present disclosure; FIG. 30 is a schematic diagram of FIG. 29 according to an embodiment of the present disclosure from another perspective; FIG. 31 is a top view of a battery, provided with a boss, mounted on a vehicle according to an embodiment of the present disclosure; and FIG. 32 is a cross-sectional view of FIG. 31 along K-K according to an embodiment of the present disclosure.

According to a first aspect, as shown in FIG. 1 to FIG. 6, FIG. 11 to FIG. 15, and FIG. 18 to FIG. 27, the present disclosure provides a battery, including: at least one battery cell 10, where each battery cell 10 has a pole 101 on a first surface 103 on one side in a first direction X; an accommodating case 11, where an accommodating cavity is provided in the accommodating case 11, and each battery cell 10 is accommodated in the accommodating cavity; and a heat exchange assembly 14, provided on the first surface 103 of the battery cell 10 and used for exchanging heat with each battery cell 10, where the projection of the pole 101 along the first direction X within the first surface 103 does not overlap the projection of the heat exchange assembly 14 along the first direction X within the first surface 103.

The accommodating case 11 is a case body forming the outer contour of the battery, and is used for accommodating other components in the battery except the accommodating case 11 itself, thereby providing a mounting and fixing space for the other components, while playing a role in sealing and protection. Therefore, during transportation and use of the battery, adverse effects of collision of external objects and entry of foreign matters on normal operation of the battery are reduced.

The heat exchange assembly 14 is internally provided with a flow channel 1411 and a heat exchange medium. The heat exchange medium can flow in the flow channel 1411 to transfer heat of a part of the heat exchange assembly 14 to another part of the heat exchange assembly 14, thereby implementing the purpose of adjusting the temperature of the object in contact with the heat exchange assembly 14.

The pole 101 passing through the surface of the battery cell 10 is used for being electrically connected to a component that implements an electrochemical reaction in the battery cell 10, to output or input electric energy to or from the battery cell 10 by using the pole 101.

The first direction X refers to the direction perpendicular to any surface of the battery cell 10.

The first surface 103 refers to any surface of the battery cell 10 and is perpendicular to the first direction X.

Optionally, the accommodating case 11 is configured as a hollow case body, and the case body has an accommodating cavity therein. For example, six plate-shaped surfaces are spliced to each other to form a case wall, and the accommodating cavity is enclosed by the six plate-shaped surfaces. Alternatively, a case body with an opening at one end is connected to a cover body that closes the opening to form a case wall, and the accommodating cavity is enclosed by the closing cover 112 and the case body.

Also optionally, the case wall is configured as a case body with one end open, the case body has an accommodating cavity therein, and the battery cell 10 placed in the accommodating cavity is exposed to the outside. When the battery is disposed in the electric device, a part of the electric device is formed into a cover body that closes the opening, to close the accommodating cavity.

The battery cell 10 is configured as a rectangular solid, and any one of the six surfaces of the battery cell 10 may be the first surface 103. The pole 101 is disposed on the surface of the battery cell 10. When one battery cell 10 is provided, the pole 101 may be disposed on any surface of the battery cell 10. When two battery cells 10 are provided, the battery cells 10 may be arranged along the second direction Y or the third direction Z. No pole 101 is disposed on the adjacent surfaces of the battery cells 10, and the poles 101 are disposed in a space between the battery cell 10 and the wall surface of the accommodating case 11. When a plurality of battery cells 10 are provided, the battery cells 10 are arranged along the second direction Y and/or the third direction Z. No pole 101 is disposed between every two adjacent battery cells 10, and the poles 101 are disposed in a space between the battery cell 10 and the wall surface of the accommodating case 11.

The length direction of the first surface 103 is parallel to the direction of the longest side of the first surface 103, and the width direction of the first surface 103 is parallel to the direction of the shortest side of the first surface 103. The second direction Y is parallel to the length direction of the first surface 103, and the third direction Z is parallel to the length direction of the first surface 103.

The heat exchange assembly 14 is disposed on the surface of the battery cells 10 on which the pole 101 is disposed, and is spaced apart from the pole 101. In other words, the pole 101 is disposed on the first surface 103 on one side of the battery cell 10 in the first direction X, the heat exchange assembly 14 is also disposed on the first surface 103, and the projection of the pole 101 along the first direction X does not overlap the projection of the heat exchange assembly 14 along the first direction X. When the battery cells 10 are arranged along the second direction Y or the third direction Z, the poles 101 form a regular region arranged in a straight line, and the heat exchange assembly 14 may be disposed in other regions outside the region. According to the size and number of the other regions, one or a plurality of heat exchange assemblies 14 may be provided. The number of the heat exchange assemblies 14 is not particularly limited in the present disclosure.

In the battery according to the embodiment of the present disclosure, since both the pole 101 and the heat exchange assembly 14 are disposed on the first surface 103, and the projection of the pole 101 along the first direction X does not overlap the projection of the heat exchange assembly 14 along the first direction X. The projection herein refers to a projection within the same plane perpendicular to the first direction X, for example, both the projections may be located on the first surface 103. Therefore, the pole 101 and the heat exchange assembly 14 share the horizontal space between the first surface 103 and the wall surface of the accommodating case 11, thereby improving the space utilization in the accommodating cavity, which not only contributes to reducing the size of the battery, but also contributes to improving the energy density of the battery. Since the battery cell 10 and the heat exchange assembly 14 are accommodated in the accommodating cavity of the accommodating case 11, the accommodating case 11 can protect the battery cell 10 and the heat exchange assembly 14. Since the heat exchange assembly 14 is disposed on the first surface 103 of the battery cell 10, the heat exchange assembly 14 can exchange heat with the battery cell 10.

In some embodiments, as shown in FIG. 7 to FIG. 10, the first surface 103 has a first region 1031 and a second region 1032, the pole 101 is disposed in the first region 1031, and the heat exchange assembly 14 is disposed in the second region 1032.

The first surface 103 is divided into two regions, which are the first region 1031 where the pole 101 is disposed and the second region 1032 where the heat exchange assembly 14 is disposed. A plurality of first regions 1031 and/or second regions 1032 may be defined on the first surface 103.

For one battery cell 10, the area of the first region 1031 may be greater than the projection area of the pole 101 itself on the first surface 103, and the edge of the first region 1031 may be located outside the contour line of the pole 101. Generally, there are two poles 101, and regions occupied by the poles 101 and the region between the two poles 101 are considered as the range of the first region 1031. The length of the first region 1031 in the second direction Y is greater than the maximum distance between the edges of the two poles 101 in the second direction Y. Optionally, the length of the first region 1031 in the second direction Y is the length of the first surface 103 in the second direction Y.

If the distance between the two poles 101 along the third direction Z is small, the length of the first region 1031 in the third direction Z is greater than the maximum distance between the edges of the two poles 101 in the third direction Z. If the distance between the two poles 101 along the third direction Z is relatively large, two first regions 1031 are provided. The poles 101 are disposed in one-to-one correspondence with the first regions 1031, and the length of the first region 1031 in the third direction Z is greater than the distance between the edges of the poles 101 in the third direction Z.

Along the third direction Z, when the maximum distance between the outer contours of the two poles 101 is greater than half of the length of the first surface 103, the distance between the two poles 101 along the third direction Z is relatively large. On the contrary, the distance between the two poles 101 along the third direction Z is relatively small.

For the plurality of battery cells 10, the plurality of battery cells 10 are arranged along the second direction Y, so that the poles 101 extend along the second direction Y, and the first region 1031 extends along the second direction Y. That is, the first region 1031 extends from the battery cell 10 located on one side in the second direction Y to the battery cell 10 located on the other side in the second direction Y. The length of the first region 1031 in the third direction Z is greater than the maximum distance between the edges of the poles 101 in the third direction Z.

If the distance between the two poles 101 in each battery cell 10 along the third direction Z is relatively small, the length of the first region 1031 in the third direction Z is greater than the maximum distance between the edges of the two poles 101 in the third direction Z. If the distance between the two poles 101 in each battery cell 10 along the third direction Z is relatively large, two first regions 1031 are provided. The poles 101 located on the same side are disposed in the same first region 1031, and the length of the first region 1031 in the third direction Z is greater than the distance between the edges of the poles 101 located on the same side in the third direction Z.

The region of the first surface 103 other than the first region 1031 is all regarded as the second region 1032, and the heat exchange assembly 14 is located within at least a part of the second region 1032.

It may be understood that both the first region 1031 and the second region 1032 may be configured as a rectangle, a parallelogram, or the like. The shapes of the first region 1031 and the second region 1032 are not particularly limited in the present disclosure.

Therefore, the pole 101 is concentrated in the first region 1031, the heat exchange assembly 14 is concentrated in the second region 1032. The pole 101 disposed in the first region 1031 and the heat exchange assembly 14 disposed in the second region 1032 do not interfere with each other.

In some embodiments, as shown in FIG. 1 to FIG. 7, FIG. 10, FIG. 18 to FIG. 21, FIG. 26 and FIG. 27, there are two second regions 1032, and the two second regions 1032 are respectively located on two sides of the first region 1031.

The first surface 103 may be divided into two second regions 1032 and one first region 1031. The first region 1031 extends from one end of the first surface 103 to the other end of the first surface 103, to divide the first surface 103 into two second regions 1032. The two second regions 1032 are respectively located on two sides of the first region 1031.

The two second regions 1032 have the same area and shape, and the first region 1031 is located on the central line of the first surface 103.

Since the first region 1031 is located in the middle and the two second regions 1032 are located on two sides, the pole 101 is concentrated in the first region 1031 located in the relative middle of the first surface 103 (for example, concentrated in the first region 1031 extending along the central line of the first surface 103 and symmetrical with respect to the central line), and two heat exchange assemblies 14 can be respectively disposed in the spaces on two sides of the pole 101. The pole 101 and the heat exchange assembly 14 make full use of the space of the accommodating cavity on the first surface 103. The arrangement is compact and reasonable, improving the space utilization in the accommodating cavity, which not only contributes to reducing the size of the battery, but also contributes to improving the energy density of the battery.

In some embodiments, as shown in FIG. 8, FIG. 9, FIG. 11 to FIG. 15, and FIG. 22 to FIG. 25, there are two first regions 1031, and the second region 1032 is located between the two first regions 1031.

The first surface 103 may be divided into two first regions 1031 and one second region 1032. The second region 1032 extends from one end of the first surface 103 to the other end of the first surface 103, to divide the first surface 103 into two first regions 1031, and the two first regions 1031 are respectively located on two sides of the second region 1032.

The two first regions 1031 have the same area and shape, and the second region 1032 is located on the central line of the first surface 103.

Since the second region 1032 is located in the middle and the two first regions 1031 are respectively located on two sides, one heat exchange assembly 14 is disposed in the middle of the first surface 103, and the spaces on two sides of the heat exchange assembly 14 are used for disposing the poles 101. The pole 101 and the heat exchange assembly 14 make full use of the space of the accommodating cavity on the first surface 103. The arrangement is compact and reasonable, improving the space utilization in the accommodating cavity, which not only contributes to reducing the size of the battery, but also contributes to improving the energy density of the battery.

In some embodiments, the area of the second region 1032 is greater than the area of the first region 1031.

Optionally, one first region 1031 and two second regions 1032 are provided. The lengths of the first region 1031 and the second region 1032 in the second direction Y are both the same as the length of the first surface 103 in the second direction Y, and the length of the first region 1031 in the third direction Z is not greater than half of the length of the first surface 103 in the third direction Z, so that the two poles 101 are disposed close to each other in the third direction Z. The heat exchange assembly 14 is disposed on at least one of the two second regions 1032. Further, the area of the second region 1032 is greater than the contact area required by the heat exchange assembly 14 to meet the heat exchange requirement of the battery cell 10.

Also optionally, two first regions 1031 and one second region 1032 are provided. The lengths of the first region 1031 and the second region 1032 in the second direction Y are both the same as the length of the first surface 103 in the second direction Y. The two first regions 1031 are respectively disposed on two sides of the first surface 103 in the third direction Z. The length of the first region 1031 in the third direction Z is greater than the distance between the edges of the poles 101 located in the region in the third direction Z. Further, the area of the second region 1032 is greater than the contact area required by the heat exchange assembly 14 to meet the heat exchange requirement of the battery cell 10.

Therefore, the pole 101 is concentrated in the first region 1031 which is relatively small, a larger area is reserved for the heat exchange assembly 14. The contact area between the heat exchange assembly 14 and the battery cell 10 becomes relatively large, enabling the heat exchange assembly 14 to meet the heat exchange requirement of the battery cell 10.

In some embodiments, as shown in FIG. 1, FIG. 11, FIG. 18, FIG. 22, FIG. 26 and FIG. 27, the plurality of battery cells 10 are arranged at least along the second direction Y. The second direction Y is consistent with the width direction of the first surface 103. The heat exchange assembly 14 at least partially covers the second region 1032 of each battery cell 10.

Optionally, the plurality of battery cells 10 are arranged along the second direction Y, and both the first region 1031 and the second region 1032 extend along the second direction Y. The heat exchange assembly 14 is disposed in the second region 1032 and is in contact with each battery cell 10.

Also optionally, the plurality of battery cells 10 are arranged along the third direction Z. On two adjacent battery cells 10, the first region 1031 and the second region 1032 alternate with each other. The heat exchange assembly 14 is disposed in at least one second region 1032 on each battery cell 10.

Also optionally, the plurality of battery cells 10 are arranged along the third direction Z to form a battery cell unit, and the plurality of battery cell units are arranged along the second direction Y. The first region 1031 and the second region 1032 both extend along the second direction Y, and the first region 1031 and the second region 1032 alternate with each other along the third direction Z. The heat exchange assembly 14 is disposed in at least one second region 1032 on each battery cell 10.

Since the plurality of battery cells 10 are arranged along the second direction Y, both the first region 1031 and the second region 1032 may extend along the second direction Y to form relatively regular regions for disposing the pole 101 and the heat exchange assembly 14. Since the heat exchange assembly 14 at least partially covers the second region 1032 of each battery cell 10, the heat exchange assembly 14 is in contact with each battery cell 10, so that the heat exchange assembly 14 can exchange heat with each battery cell 10.

In some embodiments, as shown in FIG. 15, FIG. 16, FIG. 18, FIG. 26 and FIG. 27, the heat exchange assembly 14 includes: a heat exchange plate 141; and an adhesive layer 142, including a first adhesive layer 1421 disposed on the surface of one side that is of the heat exchange plate 141 and that is close to the battery cell 10, where the heat exchange plate 141 is adhered to the battery cell 10 by using the first adhesive layer 1421.

The heat exchange plate 141 accommodates a heat exchange medium, such as water. As shown in FIG. 17, a flow channel 1411 may be disposed in the heat exchange plate 141, and the heat exchange medium flows in the flow channel 1411. Optionally, the flow channel 1411 is arranged in a serpentine shape in the heat exchange plate 141.

The heat exchange plate 141 may be adhered to the battery cell 10, or may be fixed to the accommodating case 11 by screws, or structures capable of being engaged with each other may be provided in the heat exchange plate 141 and the accommodating case 11. The fixing manner of the heat exchange plate 141 is not particularly limited in the present disclosure.

The heat exchange plate 141 may be fixed by using the adhesive layer 142. The adhesive layer 142 includes a first adhesive layer 1421. The first adhesive layer 1421 is disposed on the surface of one side that is of the heat exchange plate 141 and that is close to the battery cell 10, that is, the heat exchange plate 141 is adhered to the first surface 103 of the battery cell 10 by using the first adhesive layer 1421. The projection of the heat exchange plate 141 onto the first surface 103 is located within the range of the second region 1032.

Optionally, along the first direction X, the sum of the thickness of the first adhesive layer 1421 and the thickness of the heat exchange plate 141 is not greater than the distance between the first surface 103 and the inner wall surface of the accommodating case 11. Therefore, a gap is provided between the heat exchange plate 141 and the inner wall surface of the accommodating case 11, thereby accommodating tolerances that may occur during production and mounting.

Since the heat exchange plate 141 is adhered to the surface of the battery cell 10 by using the first adhesive layer 1421, the heat exchange plate 141 is in relatively close contact with the battery cell 10, which contributes to improving the heat exchange effect of the heat exchange plate 141 on the battery cell 10. In addition, since the heat exchange plate 141 is adhered to the battery cell 10 to form a whole, the structural strength of the battery cell 10 is improved.

In some embodiments, with continued reference to FIG. 15, FIG. 16, FIG. 18, FIG. 26 and FIG. 27, the heat exchange assembly includes: a heat exchange plate 141; and an adhesive layer 142, where the adhesive layer 142 includes a second adhesive layer 1422 disposed on the surface of one side that is of the heat exchange plate 141 and that is away from the battery cell 10, and the heat exchange plate 141 is adhered to the accommodating case 11 by using the second adhesive layer 1422.

The adhesive layer 142 further includes the second adhesive layer 1422. The second adhesive layer 1422 is disposed on the surface of one side that is of the heat exchange plate 141 and that is away from the battery cell 10, and fills the gap between the heat exchange plate 141 and the inner wall surface of the accommodating case 11, so that the heat exchange plate 141 is adhered to the inner wall surface of the accommodating case 11. The heat exchange plate 141 is fixed in the accommodating case 11, and the battery cell 10 adhered to the heat exchange plate 141 is also fixed.

The adhesive layer 142 may include only the second adhesive layer 1422. That is, the heat exchange plate 141 is adhered to the accommodating case 11 by using the second adhesive layer 1422, and no adhesive layer is disposed between the heat exchange plate 141 and the battery cell 10.

Since the heat exchange plate 141 is adhered to the inner wall surface of the accommodating case 11 by using the second adhesive layer 1422, the heat exchange plate 141 is stably fixed in the accommodating cavity. The heat exchange plate 141 and the accommodating case 11 are adhered into a whole, which contributes to improving the structural strength of the accommodating case 11. In the case where adhesive layers 142 are disposed on two sides of the heat exchange plate 141, since the battery cell 10 and the accommodating case 11 are respectively adhered to two sides of the heat exchange plate 141, the battery cell 10 is stably fixed in the accommodating cavity.

In some embodiments, as shown in FIG. 1, FIG. 3, FIG. 11, FIG. 16 to FIG. 18, FIG. 22, FIG. 26 and FIG. 27, the heat exchange plate 141 is configured as a flat plate, or the heat exchange plate 141 is configured as a shape that undulates along the first direction X.

Optionally, the heat exchange plate 141 is configured as a flat plate. The surface of the heat exchange plate 141 is a plane, which can be closely attached to the surface of the battery cell 10.

Also optionally, the heat exchange plate 141 is configured as a shape that undulates along the first direction X. The maximum distance between the edges of the heat exchange plate 141 in the first direction X is less than the distance between the first surface 103 and the inner wall surface of the accommodating case 11.

During actual manufacturing, the accommodating case 11 includes a case body with an opening at one end and a cover body that closes the opening. The battery cell 10 is placed in the case body. The surface that is of the battery cell 10 and that is close to the opening is regarded as the first surface 103, and the heat exchange plate 141 is placed on the first surface 103. An adhesive is applied to at least one side surface of the heat exchange plate 141 in the first direction X. The cover is tightly pressed against the opening, and the heat exchange plate 141 is tightly pressed. The heat exchange plate 141 deforms in the first direction X, and the adhesive moves from a position with a high pressure to the periphery to adapt to the space between the heat exchange plate 141 and the inner wall surface of the accommodating case 11.

The heat exchange plate 141 is configured as the flat plate, so that the heat exchange plate 141 can be closely attached to the surface of the battery cell 10, thereby improving the heat exchange effect. The flat plate-shaped heat exchange plate 141 is simple in structure and easy to manufacture. By configuring the heat exchange plate 141 as the shape that undulates along the first direction X, the heat exchange plate 141 can be compressed by the force in the first direction X. When the distance between the surface of the battery cell 10 and the inner wall of the accommodating case 11 is small due to production tolerances, the undulating heat exchange plate 141 can deform to adapt to the small distance, thereby reducing the impact of the production tolerances.

In some embodiments, the heat exchange plate 141 is configured to be compressible along the first direction X.

Optionally, the heat exchange plate 141 is configured as a shape that undulates along the first direction X. With this configuration, the heat exchange plate 141 has a deformable space.

Also optionally, at least a part of the heat exchange plate 141 is made of an elastic material, such as rubber. All the outer wall surfaces of the heat exchange plate 141 may be made of an elastic material, or two surfaces of the heat exchange plate 141 in the first direction X may be made of an elastic material.

Therefore, the heat exchange plate 141 can be adapted to a relatively small gap in the first direction X, so that the heat exchange plate 141 can not only be continuously attached to the battery cell 10 to maintain relatively high heat exchange efficiency, but also reduce the impact of the production tolerances.

In some embodiments, as shown in FIG. 6, FIG. 15, FIG. 21 and FIG. 25, the heat exchange assembly 14 located in the second region 1032 is separately in contact with the first surface 103 of the battery and the inner wall surface of the accommodating case 11.

Since the heat exchange assembly 14 is separately in contact with the first surface 103 and the inner wall surface of the accommodating case 11, the heat exchange assembly 14 fully occupies the space of the accommodating cavity on the first surface 103, thereby achieving the mounting space required by the heat exchange assembly 14. The heat exchange assembly 14 is limited between the first surface 103 and the inner wall surface of the accommodating case 11, and the heat exchange assembly 14 is attached to the first surface 103, so that the heat exchange assembly 14 and the battery cell 10 have relatively high heat exchange efficiency.

In some embodiments, as shown in FIG. 7 and FIG. 8, in the accommodating cavity, the battery cell 10 is a long blade battery cell. A plurality of long blade battery cells are arranged along the second direction Y to form a battery cell group, and the second direction Y is consistent with the width direction of the first surfaces 103. In the battery cell group, the poles 101 are arranged along the second direction Y, and the heat exchange assembly 14 extends along the second direction Y.

The long blade battery cell is produced by a lamination process, and a single cell is directly integrated into a battery pack by skipping a standardized module process, to form an elongated arrangement structure similar to a honeycomb aluminum plate.

Optionally, the length dimension of the long blade battery cell in the third direction Z is within the range of 800 mm to 1200 mm. For example, the length dimension may be 800 mm, 850 mm, 900 mm, 1000 mm, 1100 mm, or 1200 mm.

The plurality of long blade battery cells are arranged along the second direction Y to form a battery cell group, and the poles 101 are arranged along the second direction Y. The surface of the battery cell group, the pole 101 and the inner wall surface of the accommodating case 11 form an I-shaped arrangement, and there is a space capable of accommodating the heat exchange assembly 14 on at least one side of the pole 101 in the third direction Z. The heat exchange assembly 14 is disposed in the space.

Optionally, the pole 101 is disposed in the middle of each first surface 103, so that all poles 101 of the battery cell group are located on the central line parallel to the second direction Y, and two sides of the poles 101 in the third direction Z have sufficient space to accommodate the heat exchange assemblies 14.

Also optionally, the two poles 101 are respectively disposed on two sides of the first surface 103 in the third direction Z, and there is a sufficient space for accommodating the heat exchange assembly 14 between all the poles 101 located on one side of the battery cell group in the third direction Z and all the poles 101 located on the other side of the battery cell group in the third direction Z, and the heat exchange assembly 14 is disposed in the space.

By disposing the long blade battery cells along the second direction Y, the poles 101 are arranged in a straight line along the second direction, so that the accommodating cavity on the side of the poles 101 has a relatively large and complete space, which meets the space requirement for mounting the heat exchange assembly 14. By disposing the heat exchange assembly 14 in the space, the pole 101 and the heat exchange assembly 14 can make full use of the space of the accommodating cavity on the first surface 103. Since the long blade battery cells are arranged along the second direction Y and the heat exchange assembly 14 extends along the second direction Y, the heat exchange assembly 14 can cover the plurality of long blade battery cells to exchange heat with the long blade battery cells.

In some embodiments, as shown in FIG. 9 and FIG. 10, in the accommodating cavity, the battery cell 10 is a short blade battery cell. A plurality of battery cell units are arranged along the second direction Y to form a battery cell group. Each battery cell unit includes two or more short blade battery cells arranged side by side along the third direction Z. The second direction is consistent with the width direction of the first surface 103, and the third direction Z is consistent with the length direction of the first surface 103. Two adjacent short blade battery cells along the third direction Z are arranged side by side in such a manner that the poles 101 are close to each other or in such a manner that the poles 101 are far away from each other. In the battery cell group, the poles 101 are arranged along the second direction Y, and the heat exchange assembly 14 extends along the second direction Y.

The short blade battery cell is produced by a lamination process, a plurality of cells are assembled into an assembly by skipping a standardized module process, and the assembly is integrated into a battery pack.

Optionally, the length of the short blade battery cell in the third direction Z is within the range of 350 mm to 700 mm. For example, the length dimension may be 350 mm, 400 mm, 450 mm, 500 mm, 550 mm, 600 mm, 650 mm, or 700 mm.

The battery cell unit includes at least two short blade battery cells arranged side by side along the third direction Z. The length of the battery cell unit in the second direction Y is the same as the length of the battery cell 10 in the second direction Y. The length of the battery cell unit in the third direction Z is the sum of the lengths of all the battery cells 10 included in the battery cell unit in the third direction Z. The plurality of battery cell units are arranged along the first direction X to form a battery cell group, and the battery cells 10 in the battery cell group are arranged in a matrix.

The poles 101 are disposed on one side of the first surface 103 in the third direction Z. Optionally, two adjacent short blade battery cells along the third direction Z are arranged side by side in such a manner that the poles 101 are close to each other. The poles 101 are located on the center line of the battery cell group parallel to the second direction Y, and the heat exchange assemblies 14 may be disposed on two sides of the center line in the third direction Z.

Also optionally, two adjacent short blade battery cells along the third direction Z are arranged side by side in such a manner that the poles 101 are away from each other. All the poles 101 on one side of the battery cell group in the third direction Z are arranged along the second direction Y, and all the poles 101 on the other side of the battery cell group in the third direction Z are arranged along the second direction Y. The heat exchange assembly 14 may be disposed in the space between the poles 101 along the third direction Z.

Since the plurality of battery cell units are arranged along the second direction Y, and adjacent short blade battery cells along the third direction Z are arranged side by side in such a manner that the poles 101 are close to or away from each other, the accommodating cavities on the first surfaces 103 of the short blade battery cells form a relatively large and complete space, which can meet the space requirement for mounting the heat exchange assembly 14. Since the heat exchange assembly 14 extends along the second direction Y, the heat exchange assembly 14 can cover the plurality of short blade battery cells to exchange heat with the short blade battery cells.

In some embodiments, as shown in FIG. 18 to FIG. 25, one side that is of the accommodating case 11 and that faces the battery cell 10 forms an accommodating portion, and the pole 101 is at least partially accommodated in the accommodating portion.

At least one side of the accommodating portion, namely a space formed on the surface that is of the case wall of the accommodating case 11 and that faces the accommodating cavity, facing the accommodating cavity is in communication with the space of the accommodating cavity, so that at least a part of the components protruding from the surface of the battery cell 10 can extend into the space of the accommodating portion through the open position of the accommodating portion.

The specific structure form of the accommodating portion is not limited. For example, the accommodating portion may be an accommodating groove. The components protruding from the surface of the battery cell 10 include the pole 101.

By disposing the accommodating portion on the accommodating case 11, on the one hand, it is beneficial to adapting the shape of the space in the accommodating case 11 to the contour shape formed by the poles 101, and is beneficial to lowering the requirement for the arrangement of the pole 101. On the other hand, it is beneficial to reducing the overall size and the volume of the accommodating case 11, improving the space utilization in the accommodating case 11, and reducing the overall volume of the battery, and contributes to improving the energy density of the battery.

In some embodiments, as shown in FIG. 12, FIG. 15, FIG. 21 and FIG. 25, a busbar 12 is disposed in the first region 1031. The busbar 12 is used for connecting the poles 101 of the adjacent battery cells 10, and the busbar 12 is at least partially accommodated in the accommodating portion.

The busbar 12 is used for electrically connecting the plurality of battery cells 10, so that the battery cells 10 are connected in series and in parallel.

It should be noted that the specific structure of the busbar 12 and the manner of realizing the series connection and parallel connection between the battery cells 10 have been applied in the related art, and are not repeated here.

The battery cells 10 are arranged along the second direction Y and/or the third direction Z, and the poles 101 on adjacent battery cells 10 are connected by the busbars 12. The busbar 12 spans adjacent poles 101, and the projection of the busbar 12 onto the first surface 103 is located within the range of the first region 1031. At least a part of the busbar 12 and at least a part of the pole 101 are accommodated in the accommodating portion.

Therefore, it is beneficial to better adapting the shape of the space in the accommodating case 11 to the arrangement relationship between the busbar 12 and the battery cell 10, so that the shape of the accommodating cavity can adapt to the shape of the battery cells 10, which is beneficial to reducing the gap between the inner wall of the accommodating case 11 and the battery cell 10 and improving the space utilization of the battery.

In some embodiments, as shown in FIG. 18, FIG. 21, FIG. 22, and FIG. 25 to FIG. 27, the battery further includes: an electrical kit 13, where the electrical kit 13 is at least partially disposed in the first region 1031, and the electrical kit 13 located in the first region 1031 is at least partially accommodated in the accommodating portion.

The electrical kit 13 refers to various electric devices in the battery for controlling the input or output of electrical energy into or from the battery.

The battery further includes: an electrical kit 13. At least a part of the electrical kit 13 is disposed in the first region 1031. Along the first direction X, the projection of the accommodating portion onto the first surface 103 at least partially overlaps the projection of the electrical kit 13 disposed in the first region 1031 onto the first surface 103, and the electrical kit 13 may be accommodated in the accommodating portion.

Therefore, at least a part of the pole 101, at least a part of the busbar 12, and at least a part of the electrical kit 13 are integrated in the first region 1031. The accommodating portion is provided on the accommodating case 11 corresponding to the first region 1031, which can accommodate more components protruding from the surface of the battery cell 10, thereby improving the utilization of the space in the accommodating portion. This is beneficial to reducing the gap between the inner wall of the accommodating cavity and the battery cell 10, and improving space utilization of the battery.

In some embodiments, the electrical kit 13 includes at least one of a sampling structure, a battery management system, a relay, and a high-voltage power distribution unit.

The battery management system is used for managing and controlling each electric device in each battery, monitoring the operating status of the battery, and adopting a suitable control strategy according to the operating status of the battery to prevent the battery from being overcharged and overdischarged, so as to prolong the service life of the battery.

When the battery in the electric device needs to be charged and discharged, the relay opens or closes the connection between the battery and other electric devices in the electric device in response to an instruction of an electrical system, to implement transmission or interruption of electric energy.

The high-voltage power distribution unit is used for monitoring a high-voltage connection state and an insulation state in the battery in real time, to manage the safety of high-voltage electricity usage within the battery.

The sampling structure is used for obtaining parameter information such as voltages and temperatures of various components in the battery, such as the battery cell 10, and transmitting the obtained parameter information to a battery management system (BMS), so as to properly implement different control strategies for the battery management system to charge and discharge the battery safely and efficiently.

It should be noted that the specific structures of the sampling structure, the battery management system, the relay, and the high-voltage power distribution unit and the principles for implementing the corresponding functions have been applied in the related art, and are not repeated here.

Therefore, at least one of the sampling structure, the battery management system, the relay and the high-voltage power distribution unit can be accommodated in the accommodating portion, thereby reducing the space of the accommodating cavity occupied by the original arrangement position of the at least one of the sampling structure, the battery management system, the relay, and the high-voltage power distribution unit. This is beneficial to reducing the gap between the inner wall of the accommodating cavity and the battery cell 10, and improving space utilization of the battery.

In some embodiments, as shown in FIG. 18 to FIG. 25 and FIG. 27, the accommodating case 11 has a boss 111. The boss 111 is formed by the accommodating case 11 protruding, along the first direction X, in the direction away from the battery cell 10. One side that is of the boss 111 and that faces the battery cell 10 forms an accommodating portion. At least a part of the pole 101 and at least a part of the electrical kit 13 are located in the accommodating portion and leave a gap with the inner wall of the boss 111.

A plurality of bosses 111 may be provided. The accommodating portion of the boss 111 is at least used for accommodating the pole 101. When the distance between the two poles 101 along the third direction Z is relatively small, only one boss 111 needs to be constructed on the accommodating case 11 corresponding to the position of the pole 101, the projection of the boss 111 onto the first surface 103 along the first direction X is located within the range of the pole 101, and at least a part of the pole 101 is located in the accommodating portion. When the distance between the two poles 101 along the third direction Z is relatively large, two bosses 111 are respectively disposed corresponding to the poles 101 located on two sides to accommodate at least a part of the pole 101.

The accommodating portion can be further used for accommodating the electrical kit 13. Optionally, at least a part of the electrical kit 13 is disposed between the pole 101 and the boss 111, so that the at least a part of the electrical kit 13 is accommodated in the accommodating portion. Also optionally, a part of the electrical kits 13 is disposed on the surface that is of the battery cell 10 and that is adjacent to or opposite to the first surface 103, and a boss 111 is formed on the accommodating case 11 corresponding to the position where the electrical kit 13 is disposed.

Along the first direction X, the sum of the length of the pole 101 and the length of the electrical kit 13 is less than the distance between the inner wall surface of the boss 111 and the first surface 103, so that a gap is reserved between the pole 101, the electrical kit 13 and the inner wall of the boss 111, thereby reducing the probability that the boss 111 deforms under the pressure in the first direction X and damages the pole 101 and the electrical kit 13 in the accommodating portion.

Since the boss 111 is formed by the accommodating case 11 protruding, along the first direction X, in the direction away from the battery cell 10, and one side that is of the boss 111 and that faces the battery cell 10 forms the accommodating portion, the space of the accommodating portion can be increased by increasing the protruding height of the boss 111 within a certain range, and the boss 111 can be configured according to the size of components to be accommodated, accommodating as many components as possible in the accommodating portion, thereby reducing the space of the accommodating cavity occupied by the components. This is beneficial to reducing the gap between the inner wall of the accommodating cavity and the battery cell 10, and improving space utilization of the battery.

In some embodiments, the length direction of the boss 111 is consistent with the second direction Y, the length of the boss 111 along the second direction Y is greater than or equal to the length of the accommodating cavity along the second direction Y, and the second direction Y is consistent with the width direction of the first surface 103. Or, the length direction of the boss 111 is consistent with the third direction Z, the length of the boss 111 along the third direction Z is greater than or equal to the length of the accommodating cavity along the third direction Z, and the third direction Z is consistent with the length direction of the first surface 103.

The length direction of the boss 111 refers to the direction of the longest side of the boss 111.

Since the length of the boss 111 along the second direction Y is greater than or equal to the length of the accommodating cavity along the second direction Y, the projection of the boss 111 along the first direction X covers the range of all the battery cells 10 along the second direction Y, so that the poles 101 of all the battery cells 10 can be accommodated in the boss 111. Since the length of the boss 111 along the third direction Z is greater than or equal to the length of the accommodating cavity along the third direction Z, the boss 111 has a relatively large accommodating portion, which can accommodate a part of the pole 101 and more electrical kits 13. This is beneficial to reducing the space occupied by the electrical kit 13 and the like at other positions in the accommodating cavity, and improving space utilization of the battery.

In some embodiments, the length of the boss 111 along the second direction Y or the third direction Z is not greater than 500 mm. For example, the length dimension may be 50 mm, 100 mm, 150 mm, 200 mm, 250 mm, 300 mm, 350 mm, 400 mm, 450 mm, or 500 mm.

Therefore, on one hand, it is beneficial to achieving a relatively large flat region on the surface of the accommodating case 11, to adapt to other components in the electric device, and reduce the adverse effects of the boss 111 on the arrangement of other components in the electric device. On the other hand, it reduces the adverse effects of reduced structural strength of the boss 111 due to the large size, and lowers the probability of damage to components in the accommodating portion caused by the deformation of the boss 111.

In some embodiments, the length of the boss 111 along the second direction Y or the third direction Z is within the range of 50 mm to 300 mm. For example, the length dimension may be 50 mm, 80 mm, 100 mm, 150 mm, 160 mm, 200 mm, 220 mm, 250 mm, or 300 mm.

Therefore, the space in the accommodating portion can accommodate the components protruding from the battery cell 10, and the accommodating case 11 can maintain sufficient structural strength.

In some embodiments, as shown in FIG. 2, FIG. 6, FIG. 12, FIG. 15, FIG. 21, and FIG. 25, a protrusion 102 is disposed in the first region 1031 of the battery cell 10. The pole 101 is disposed on the surface of one side that is of the protrusion 102 and that faces the first direction X. At least a part of the protrusion 102 is located in the accommodating portion.

A protrusion 102 protruding toward the case wall is constructed in the first region 1031. The shape of the protrusion 102 may be configured as a cylinder, a cube, or the like, and the specific shape of the protrusion 102 is not particularly limited in the present disclosure.

The pole 101 is disposed on the surface of one side that is of the protrusion 102 and that is away from the battery cell 10. The plurality of battery cells 10 are arranged at least along the second direction Y, and both the first region 1031 and the protrusion 102 extend along the second direction Y. Corresponding to the protrusion 102 in each first region 1031, the boss 111 is constructed on the accommodating case 11, so that at least a part of the pole 101 is accommodated in the accommodating portion. In the first direction X, the length of the protrusion 102 may be greater than the distance between the inner wall surface of the accommodating case 11 and the first surface 103, so that the whole pole 101 and a part of the protrusion 102 are accommodated in the accommodating portion.

Further, the busbar 12 connecting the adjacent poles 101 is accommodated in the accommodating portion. A part of the electrical kit 13 may be disposed on the surface of one side that is of the protrusion 102 and that is away from the battery cell 10, so that the part of the electrical kit 13 is accommodated in the accommodating portion.

By disposing the protrusion 102 in the first region 1031 of the battery cell 10 and disposing the pole 101 on the protrusion 102, the pole 101 is isolated from the second region 1032, and the heat exchange assembly 14 located in the second region 1032 and the pole 101 do not interfere with each other, thereby reducing the risk of electrical connectivity between the pole 101 and the heat exchange assembly 14. The height of the pole in the first direction X can be increased without reducing the strength of the pole 101, which is convenient for providing a heat exchange assembly accommodating space with a suitable height as required.

In some embodiments, as shown in FIG. 2, FIG. 3, FIG. 5, FIG. 6, FIG. 14, FIG. 15, FIG. 20, FIG. 21, FIG. 24 and FIG. 25, the pole 101 includes a positive electrode pole and a negative electrode pole, and the positive electrode pole and the negative electrode pole are spaced apart on the protrusion 102.

One battery cell 10 is provided with two poles 101, which are respectively a positive electrode pole connected to a positive electrode of the battery cell 10 and a negative electrode pole connected to a negative electrode of the battery cell 10. The positive electrode pole and the negative electrode pole are spaced apart on the protrusion 102. A protrusion 102 may be constructed on the surface of the battery cell 10, and the positive electrode pole and the negative electrode pole are disposed on the same protrusion 102. Relatively independent protrusions 102 may alternatively be constructed on the surface of the battery corresponding to the positive electrode pole and the negative electrode pole, respectively.

By disposing the positive electrode pole and the negative electrode pole to be spaced apart on the protrusion 102, the positive electrode pole and the negative electrode pole are relatively independent and do not interfere with each other, thereby reducing the risk of a short circuit between the two.

In some embodiments, as shown in FIG. 2, FIG. 3, FIG. 5, FIG. 6, FIG. 20 and FIG. 21, there is one protrusion 102. The positive electrode pole and the negative electrode pole are spaced apart on the protrusion 102. A connecting line between the positive electrode pole and the negative electrode pole is parallel to the length direction of the first surface 103, or a connecting line between the positive electrode pole and the negative electrode pole is parallel to the width direction of the first surface 103.

Only one protrusion 102 is constructed on the surface of the battery cell 10, and the positive electrode pole and the negative electrode pole are spaced apart on the protrusion 102. The positive electrode pole and the negative electrode pole may be disposed on the diagonal line of the protrusion 102, or the positive electrode pole and the negative electrode pole may be spaced apart from each other on the protrusion 102 along the second direction Y, or the positive electrode pole and the negative electrode pole may be spaced apart from each other on the protrusion 102 along the third direction Z.

When the positive electrode pole and the negative electrode pole are spaced apart from each other along the second direction Y, a connecting line between the positive electrode pole and the negative electrode pole is parallel to the width direction of the first surface 103. When the positive electrode pole and the negative electrode pole are spaced apart from each other along the third direction Z, a connecting line between the positive electrode pole and the negative electrode pole is parallel to the length direction of the first surface 103.

The plurality of battery cells 10 are arranged at least along the second direction Y, and both the first region 1031 and the protrusion 102 extend along the second direction Y. The heat exchange assembly 14 may be disposed in the second region 1032 on at least one side of the protrusion 102 in the third direction Z.

The protrusion 102 may be disposed in the middle or on one side of the first surface 103, and the arrangement position of the protrusion 102 on the surface of the battery cell 10 is not particularly limited in the present disclosure.

Since the positive electrode pole and the negative electrode pole are arranged on the same protrusion 102, only one protrusion 102 needs to be manufactured to provide mounting positions for the two poles 101, which is beneficial to reducing the manufacturing steps of the first housing wall and reducing the production costs. By arranging the positive electrode pole and the negative electrode pole in such a manner that a connecting line between the two is parallel to the length direction of the first surface 103, or arranging the positive electrode pole and the negative electrode pole in such a manner that a connecting line between the two is parallel to the width direction of the first surface 103, the arrangement is relatively regular, which facilitates later maintenance. Moreover, since the area of the protrusion 102 for disposing the two poles 101 may be designed to be greater than the area of the protrusion for disposing the single pole 101, it contributes to improving the strength of the position where the pole 101 is arranged in the battery cell 10.

In some embodiments, as shown in FIG. 14, FIG. 15, FIG. 24 and FIG. 25, at least two protrusions 102 are spaced apart from each other, the positive electrode pole is disposed on one protrusion 102, and the negative electrode pole is disposed on the other protrusion 102.

Two protrusions 102 are constructed in the first region 1031 of the first surface 103, the two protrusions 102 are spaced apart from each other in the first region 1031, and the two protrusions 102 may be arranged along the second direction Y or the third direction Z. The positive electrode pole is disposed on one protrusion 102, and the negative electrode pole is disposed on the other protrusion 102. The two protrusions 102 may be spaced apart from each other on one side or in the middle of the first surface 103, or the two protrusions 102 may be respectively disposed on two sides of the first surface 103. The arrangement position of the protrusion 102 on the surface of the battery cell 10 is not particularly limited in the present disclosure.

Specifically, the first region 1031 may be located in the middle of the first surface 103. The plurality of battery cells 10 are arranged at least along the second direction Y. The first region 1031 and the protrusion 102 both extend along the second direction Y. The heat exchange assemblies 14 may be disposed in the second regions 1032 on two sides of the first region 1031 along the third direction Z.

The first region 1031 may be located on one side of the first surface 103 in the third direction Z. The plurality of battery cells 10 are arranged at least along the second direction Y. The first region 1031 and the protrusion 102 both extend along the second direction Y. The heat exchange assembly 14 may be disposed in the second region 1032 located on the other side of the first surface 103 in the third direction Z.

The two first regions 1031 may be respectively located on two sides of the first surface 103 in the third direction Z. One protrusion 102 is disposed in each first region 1031. The plurality of battery cells 10 are arranged at least along the second direction Y. The first region 1031 and the protrusion 102 both extend along the second direction Y. The heat exchange assembly 14 may be disposed in the second region 1032 located between the two first regions 1031.

Since at least two protrusions 102 are provided, and the positive electrode pole and the negative electrode pole are respectively arranged on different protrusions 102, on the one hand, it is beneficial to reducing the volume of the single protrusion 102, so that the structure is more compact, and it is beneficial to reducing the volume of the battery. On the other hand, there is a relatively large distance between the positive electrode pole and the negative electrode pole, so that the two can be relatively independent and do not interfere with each other, thereby reducing the risk of a short circuit between the two.

In some embodiments, the length direction of the first surface 103, the length direction of the protrusion 102, and the third direction Z are consistent. Along the third direction Z, the length of the protrusion 102 is 10% to 30% of the length of the battery cell 10.

Along the third direction Z, since the ratio of the length of the protrusion 102 to the length of the battery cell 10 is greater than or equal to 10%, the positive electrode pole and the negative electrode pole have a sufficient safety distance therebetween after being disposed on the same protrusion 102, thereby reducing the risk of a short circuit between the two. Along the third direction Z, since the ratio of the length of the protrusion 102 to the length of the battery cell 10 is less than or equal to 30%, not less than 70% of the length of the battery cell 10 along the third direction Z can be reserved for the heat exchange assembly 14, thereby providing a sufficient mounting space for the heat exchange assembly 14.

Further, if the pole 101 is disposed on the first surface 103, the arrangement area of the pole 101 is 10% to 30% of the area of the first surface 103. If the pole 101 is disposed on the protrusion 102, the arrangement area of the protrusion 102 is 10% to 30% of the area of the first surface 103.

In some embodiments, as shown in FIG. 2, FIG. 3, FIG. 5, FIG. 6, FIG. 14, FIG. 15, FIG. 20, FIG. 21, FIG. 24 and FIG. 25, along the third direction Z, the distance between the center point of the protrusion 102 and the center point of the first surface 103 is 0% of the length of the battery cell 10, or the distance between the center point of the protrusion 102 and the center point of the first surface 103 is within the range of 45% to 47.5% of the length of the battery cell 10.

Optionally, along the third direction Z, the distance between the center point of the protrusion 102 and the center point of the first surface 103 is 0% of the length of the battery cell 10. In other words, the protrusion 102 is disposed in the middle of the first surface 103. The plurality of battery cells 10 are arranged at least along the second direction Y. The protrusion 102 extends along the second direction Y. The protrusion 102 divides the space of the accommodating cavity on the first surface 103 into two spaces, which are similar in size and sufficient to accommodate the heat exchange assemblies 14.

Optionally, along the third direction Z, the distance between the center point of the protrusion 102 and the center point of the first surface 103 is within the range of 45% to 47.5% of the length of the battery cell 10. In other words, one protrusion 102 is disposed on one side of the first surface 103 in the third direction Z, or two protrusions 102 are respectively disposed on two sides of the first surface 103 in the third direction Z. The plurality of battery cells 10 are arranged at least along the second direction Y. The protrusion 102 extends along the second direction Y. If one protrusion 102 is disposed on one side of the first surface 103 in the third direction Z, the heat exchange assembly 14 can be disposed in the accommodating cavity space on the other side of the first surface 103 in the third direction Z. If the two protrusions 102 are respectively disposed on two sides of the first surface 103 in the third direction Z, the heat exchange assembly 14 can be disposed in the accommodating cavity space between the two protrusions 102.

Along the third direction Z, since the distance between the center point of the protrusion 102 and the center point of the first surface 103 is 0% of the length of the battery cell 10, sufficient spaces are reserved on two sides of the protrusion 102 in the third direction Z for disposing the heat exchange assemblies 14. Along the third direction Z, since the distance between the center point of the protrusion 102 and the center point of the first surface 103 is within the range of 45% to 47.5% of the length of the battery cell 10, a sufficient space is reserved on one side of the protrusion 102 for disposing the heat exchange assembly 14.

In some embodiments, as shown in FIG. 21, along the first direction X, the height of the pole 101, disposed on the protrusion 102, from the first surface 103 of the battery is greater than or equal to the height of the heat exchange assembly 14, and a gap is reserved between the protrusion 102, the pole 101, the electrical kit 13, and the inner wall surface of the boss 111.

Optionally, along the first direction X, the height of the protrusion 102 from the first surface 103 of the battery may be greater than or equal to the height of the heat exchange assembly 14. The pole 101 is disposed on the surface of one side that is of the protrusion 102 and that is away from the battery cell 10, so that the pole 101 is spatially separated from the heat exchange assembly 14, thereby reducing the risk of electrical connectivity between the pole 101 and the heat exchange assembly 14.

Also optionally, along the first direction X, the height of the protrusion 102 from the first surface 103 of the battery does not necessarily exceed the height of the heat exchange assembly 14, but the height of the pole 101, disposed on the protrusion 102, from the first surface 103 of the battery exceeds the height of the heat exchange assembly 14.

Along the first direction X, the sum of the length of the protrusion 102, the length of the pole 101, and the length of the electrical kit 13 is less than the distance between the inner wall surface of the boss 111 and the first surface 103, so that a gap is reserved between the protrusion 102, the pole 101, the electrical kit 13, and the inner wall of the boss 111, thereby reducing the probability that the boss 111 deforms under the pressure in the first direction X and damages the protrusion 102, the pole 101, and the electrical kit 13 in the accommodating portion.

Therefore, the protrusion 102, the pole 101, and the electrical kit 13 are not compressed by the inner wall surface of the boss 111 when being placed in the accommodating portion.

In some embodiments, as shown in FIG. 26 to FIG. 28, the accommodating case 11 is provided with a through hole 113 that allows the first region 1031 to be opened to the outside, and a detachable closing cover 112 is disposed at the through hole 113. The projection of the through hole 113 along the first direction X and the projection of the first region 1031 along the first direction X have an overlapping portion.

The through hole 113 penetrates through the case wall of the accommodating case 11, and the accommodating cavity is in communication with the outside through the through hole 113. The detachable closing cover 112 is disposed at the through hole 113, and the closing cover 112 is mounted to the accommodating case 11 and covers the through hole 113. The through hole 113 is disposed corresponding to at least a part of the first region 1031, so that the projection of the through hole 113 along the first direction X and the projection of the first region 1031 along the first direction X have the overlapping portion, thereby facilitating the maintenance of the at least a part of the first region 1031 through the through hole 113.

Optionally, a through hole 113 is formed on the surface of one side wall that is of the boss 111 and that is away from the battery cell 10. The through hole 113 connects the accommodating portion to the outside, and exposes components such as the pole 101 and the busbar 12 accommodated in the boss 111 to the outside for maintenance.

Since the accommodating case 11 is provided with the through hole 113, the inside of the battery can be in communication with the outside, so that the maintenance personnel can perform internal maintenance of the battery through the through hole 113. By detachably mounting the closing cover 112 at the through hole 113, the closing cover 112 can close the through hole 113 when being mounted at the through hole 113, isolating the accommodating cavity from the outside, thereby allowing the battery cell 10 to operate in a stable environment. When the closing cover 112 is detached from the through hole 113, the inside of the battery is in communication with the outside through the through hole 113 for internal maintenance of the battery. Since the projection of the through hole 113 along the first direction X and the projection of the first region 1031 along the first direction X have the overlapping portion, the maintenance personnel can directly access at least a part of the pole 101 through the through hole 113.

In some embodiments, as shown in FIG. 27 and FIG. 28, a sealing member 114 is disposed around the through hole 113, and the sealing member 114 is used for sealing between the through hole 113 and the closing cover 112.

The sealing member 114 is made of an elastic material, such as rubber, which is not particularly limited in the present disclosure. The sealing member 114 is disposed between the closing cover 112 and the through hole 113, and the sealing member 114 is disposed around the edge of the through hole 113. When the closing cover 112 closes the through hole 113, the sealing member 114 is tightly pressed to reduce the gap between the closing cover 112 and the through hole 113.

Therefore, the closing cover 112 and the through hole 113 can maintain a relatively tight sealing effect, preventing external dust and liquid from entering the accommodating cavity and damaging the battery cell 10.

In some embodiments, as shown in FIG. 26 to FIG. 28, the closing cover 112 is configured as a flat plate; or the closing cover 112 is configured to be convex relative to the surface of the accommodating case 11, one side that is of the closing cover 112 and that faces the battery cell 10 forms the accommodating portion, and at least a part of the pole 101 is located in the accommodating portion via the through hole 113.

Optionally, the closing cover 112 is configured as a flat plate. The closing cover 112 is tightly attached to the surface of the case wall of the accommodating case 11 and completely covers the through hole 113, so that the through hole 113 is sealed. After the through hole 113 is closed by the closing cover 112, there is a gap between the pole 101 and the closing cover 112, that is, the length of the pole 101 in the first direction X is less than the distance between the first surface 103 and the closing cover 112, so that the pole 101 is accommodated in the accommodating cavity.

Also optionally, the closing cover 112 is configured to be convex relative to the surface of the accommodating case 11. The closing cover 112 protrudes 102 in the direction away from the battery cell 10, and one side that is of the closing cover 112 and that faces the battery cell 10 forms an accommodating portion. The accommodating cavity may be in communication with the accommodating portion through the through hole 113, and at least a part of at least one of the pole 101, the busbar 12, and the electrical kit 13 may be accommodated in the accommodating portion.

By configuring the closing cover 112 as the flat plate shape, the structure is simple, and the processing of the closing cover 112 is facilitated. Since the closing cover 112 is configured to be convex relative to the surface of the accommodating case 11, and one side that is of the closing cover 112 and that faces the battery cell 10 forms the accommodating portion, at least a part of the pole 101 is placed in the accommodating portion of the closing cover 112, so that the space occupied by the pole 101 in the accommodating cavity is reduced, which contributes to reducing the volume of the accommodating case 11.

In some embodiments, as shown in FIG. 27 and FIG. 28, the through hole 113 is provided on the wall surface that is of the boss 111 and that faces the battery cell 10.

A through hole 113 is formed on the surface of one side wall that is of the boss 111 and that is away from the battery cell 10, and a convex closing cover 112 may be disposed at the through hole 113. The accommodating portion of the boss 111 and the accommodating portion of the closing cover 112 form a relatively large accommodating space in the first direction X to accommodate more components such as the pole 101.

Optionally, the inner wall surface of the closing cover 112 surrounds and is closely attached to the outer surface of the boss 111, and the sealing member 114 may be disposed between the inner wall surface of the closing cover 112 and the outer surface of the boss 111, to accommodate at least a part of the boss 111 in the accommodating portion of the closing cover 112. In the first direction X, the distance between the inner wall surface of the closing cover 112 and the first surface 103 is greater than the distance between the surface that is of the boss 111 and that is away from the battery cell 10 and the first surface 103, so that the components accommodated in the boss 111 may be accommodated in the closing cover 112 through the through hole 113.

Also optionally, the closing cover 112 is disposed on the surface of one side that is of the boss 111 and that is away from the battery cell 10. In the first direction X, the accommodating portion of the boss 111 and the accommodating portion of the closing cover 112 are superimposed to form a relatively large accommodating space in the first direction X to accommodate more components such as the pole 101.

Therefore, the accommodating portion of the closing cover 112 and the accommodating portion of the boss 111 are superimposed to form a relatively large space, which can accommodate more poles 101 and even electrical kits 13, or the like, thereby further reducing the space of the accommodating cavity occupied by the portion of the battery cell 10 protruding from the surface. The through hole 113 connects the accommodating portion of the boss 111 to the outside, and the maintenance personnel can maintain the components such as the pole 101 in the accommodating portion through the through hole 113.

According to a second aspect, the present disclosure further provides an electric device, including a battery, and the battery serves as a power source of the electric device.

Since the electric device includes the battery that fully utilizes the internal space of the accommodating case 11, the space reserved by the electric device for the battery can be reduced, or the overall energy of the battery can be increased without reducing the volume, thereby contributing to improving the arrangement freedom of the battery and the surrounding structure thereof in the electric device, and contributing to improving the endurance/standby capability of the electric device.

In some embodiments, as shown in FIG. 29 to FIG. 32, the plurality of battery cells 10 are arranged along the second direction Y to form a battery cell queue, and the second direction Y is consistent with the width direction of the first surface 103. The surface of the accommodating case 11 is configured to have a boss 111 extending along the second direction Y, and the boss 111 is formed by the surface of the accommodating case 11 protruding, along the first direction X, in the direction away from the battery cell 10. The electric device is a vehicle. The vehicle further includes at least one seat 15. The battery is located on the side of the seat 15 along an up-down direction X of the vehicle, and the through hole 113 of the battery faces the other side of the up-down direction X of the vehicle. The up-down direction X of the vehicle is consistent with the first direction X, and the first direction X is perpendicular to the second direction Y. The projection of the seat 15 onto the battery along the up-down direction X of the vehicle is located outside the range of the boss 111.

The up-down direction X of the vehicle refers to a direction perpendicular to the plane on which the vehicle travels.

The first direction X refers to the direction perpendicular to any surface of the battery cell 10. In this embodiment, the first direction X is consistent with the up-down direction X of the vehicle.

The second direction Y refers to a direction that is consistent with the width direction of the first surface 103 and perpendicular to the first direction X.

In the up-down direction X of the vehicle, the battery is mounted on the lower side of the seat 15, and a boss 111 is constructed on the surface that is of the accommodating case 11 and that is close to the seat 15. That is, a boss 111 is constructed on the upper side surface of the accommodating case 11, and the boss 111 is formed by protruding in the direction away from the battery cell 10. The boss 111 has the accommodating portion to accommodate components protruding from the surface of the battery cell 10. The battery cells 10 in the accommodating cavity are arranged along the second direction Y to form a battery cell queue. The boss 111 extends along the second direction Y. The accommodating portion of the boss 111 can at least accommodate the pole 101. To avoid the boss 111 and the seat 15 from being disposed in an obstructed manner, the seat 15 is disposed such that the projection of the seat onto the battery along the up-down direction X of the vehicle is located outside the range of the boss 111.

Optionally, along the up-down direction X of the vehicle, the upper wall surface of the accommodating case 11 is configured as a baseplate of the vehicle. The seat 15 is disposed on the upper side of the baseplate, and the accommodating cavity is located on the lower side of the baseplate. Also optionally, the vehicle further includes a baseplate. Along the up-down direction X of the vehicle, the seat 15 is disposed on the upper side of the baseplate, the accommodating case 11 is disposed on the lower side of the baseplate, and a protrusion protruding upward is constructed on the baseplate corresponding to the boss 111 to accommodate the boss 111.

Since the surface of the accommodating case 11 is provided with the boss 111, the boss 111 can provide an additional space to accommodate components in the battery, which is beneficial to reducing space required by the battery, or can increase the overall energy of the battery without reducing the volume, thereby contributing to improving the endurance mileage of the vehicle. Since the projection of the seat 15 onto the battery along the up-down direction X of the vehicle is located outside the range of the boss 111, the seat 15 and the boss 111 make full use of the same horizontal space, which improves the space utilization in the vehicle and has less mutual interference. Since the battery is located on one side of the seat 15 along the up-down direction X of the vehicle, and the through hole 113 of the battery faces the other side in the up-down direction X of the vehicle, battery maintenance can be performed in the vehicle without disassembling the battery, thereby saving time and effort.

In some embodiments, with continued reference to FIG. 29 to FIG. 32, the vehicle includes at least one seat row. The seat row includes at least two seats 15 arranged along the left-right direction Z of the vehicle. The left-right direction Z of the vehicle is the third direction Z, and the third direction Z is perpendicular to both the first direction X and the second direction Y. Along the left-right direction Z of the vehicle, a boss 111 is located between adjacent seats 15 in the same seat row, and/or bosses 111 are located on two sides of the same seat row in the left-right direction Z of the vehicle.

The third direction Z refers to a direction consistent with the length direction of the first surface 103.

The left-right direction Z of the vehicle refers to a direction that is parallel to the plane on which the vehicle travels and is consistent with the third direction Z.

A plurality of seats 15 are provided. At least two seats 15 are spaced apart along the left-right direction Z of the vehicle. The seats 15 disposed along the left-right direction Z of the vehicle are regarded as a seat row, and at least one seat row is spaced apart along the second direction Y. Along the left-right direction Z of the vehicle, the boss 111 is located between adjacent seats 15 in the same seat row, and/or the bosses 111 are located on two sides of the same seat row in the left-right direction Z of the vehicle.

Therefore, the seat 15 is not affected by the protrusion 102 when the seat is adjusted forward or backward. Moreover, the arrangement position of the boss 111 is staggered from the use position of a user, which reduces the interference of the boss 111 on the normal activities of the user in the vehicle, improves the user experience, and improves the space utilization in the vehicle.

In some embodiments, the battery cells 10 are arranged along the second direction Y and the third direction Z to form a battery cell array. When the number of the battery cells 10 arranged along the third direction Z is greater than the number of the battery cells 10 arranged along the second direction Y, the number of the battery cells 10 arranged along the second direction Y is not more than 2. When the number of the battery cells 10 arranged along the third direction Z is less than the number of the battery cells 10 arranged along the second direction Y, the number of the battery cells 10 arranged along the third direction Z is not more than 4.

Therefore, the size of the battery does not exceed the size of a conventional vehicle chassis, enabling the battery to be compatible with most vehicles.

According to a third aspect, the present disclosure further provides an energy storage device, including the foregoing battery, and the battery is configured to be capable of storing and providing electrical energy.

Since the energy storage device includes the battery that fully utilizes the internal space of the accommodating case 11, the space reserved by the energy storage device for the battery can be reduced, or the overall energy of the battery can be increased without reducing the volume, thereby contributing to reducing the space required to be occupied by the energy storage device or increasing the energy storage capacity.

The various embodiments/implementations provided in the present disclosure may be combined with each other without contradictions.

The foregoing descriptions are merely preferred embodiments of the present disclosure, and are not intended to limit the present disclosure. For a person skilled in the art, various modifications and changes may be made to the present disclosure. Any modification, equivalent replacement, or improvement made without departing from the spirit and principle of the present disclosure shall fall within the protection scope of the present disclosure.

### Industrial applicability

The battery, the electric device and the energy storage device provided by the present disclosure are beneficial to improving the space utilization and energy density of the battery, thereby saving the configuration space of the battery in the electric device and the energy storage device or improving the energy of the battery in the electric device and the energy storage device, and reducing the maintenance costs of the battery.

## Claims

1. A battery, comprising:
at least one battery cell, wherein each battery cell has a pole on a first surface on one side in a first direction;
an accommodating case, wherein an accommodating cavity is provided in the accommodating case, and each battery cell is accommodated in the accommodating cavity; and
a heat exchange assembly, provided on the first surface of the battery cell and used for exchanging heat with each battery cell,
the projection of the pole along the first direction within the first surface does not overlap the projection of the heat exchange assembly along the first direction within the first surface.

2. The battery according to claim 1, wherein
the first surface has a first region and a second region, the pole is disposed in the first region, and the heat exchange assembly is disposed in the second region.

3. The battery according to claim 2, wherein
there are two second regions, and the two second regions are respectively located on two sides of the first region.

4. The battery according to claim 2, wherein
there are two first regions, and the second region is located between the two first regions.

5. The battery according to any one of claims 2 to 4, wherein
the area of the second region is greater than the area of the first region.

6. The battery according to any one of claims 2 to 5, wherein
the plurality of battery cells are arranged at least along a second direction, the second direction is consistent with the width direction of the first surface, and
the heat exchange assembly at least partially covers the second region of each battery cell.

7. The battery according to any one of claims 1 to 6, wherein
the heat exchange assembly comprises:
a heat exchange plate; and
an adhesive layer, comprising a first adhesive layer disposed on the surface of one side that is of the heat exchange plate and that is close to the battery cell, and
the heat exchange plate is adhered to the battery cell by using the first adhesive layer.

8. The battery according to any one of claims 1 to 7, wherein
the heat exchange assembly comprises:
a heat exchange plate; and
an adhesive layer, wherein the adhesive layer comprises a second adhesive layer disposed on the surface of the layer that is of the heat exchange plate and that is away from the battery cell, the heat exchange plate is adhered to the accommodating case by using the second adhesive layer.

9. The battery according to claim 7 or 8, wherein
the heat exchange plate is configured as a flat plate, or the heat exchange plate is configured as a shape that undulates along the first direction.

10. The battery according to any one of claims 7 to 9, wherein
the heat exchange plate is configured to be compressible along the first direction.

11. The battery according to any one of claims 2 to 6, wherein
the heat exchange assembly located in the second region is separately in contact with the first surface of the battery and the inner wall surface of the accommodating case.

12. The battery according to any one of claims 1 to 11, wherein
in the accommodating cavity, the battery cell is a long blade battery cell, a plurality of long blade battery cells are arranged along the second direction to form a battery cell group, and the second direction is consistent with the width direction of the first surface; and
in the battery cell group, the poles are arranged along the second direction, and the heat exchange assembly extends along the second direction.

13. The battery according to any one of claims 1 to 11, wherein
in the accommodating cavity, the battery cell is a short blade battery cell, a plurality of battery cell units are arranged along the second direction to form a battery cell group, each battery cell unit comprises two or more short blade battery cells arranged side by side along a third direction, the second direction is consistent with the width direction of the first surface, and the third direction is consistent with the length direction of the first surface;
two adjacent short blade battery cells along the third direction are arranged side by side in such a manner that the poles are close to each other or in such a manner that the poles are far away from each other; and
in the battery cell group, the poles are arranged along the second direction, and the heat exchange assembly extends along the second direction.

14. The battery according to any one of claims 2 to 6, wherein
one side that is of the accommodating case and that faces the battery cell forms an accommodating portion, and the pole is at least partially accommodated in the accommodating portion.

15. The battery according to claim 14, wherein
a busbar is disposed in the first region, the busbar is used for connecting the poles of the adjacent battery cells, and the busbar is at least partially accommodated in the accommodating portion.

16. The battery according to claim 14 or 15, wherein
the battery further comprises: an electrical kit, wherein the electrical kit is at least partially disposed in the first region, and the electrical kit located in the first region is at least partially accommodated in the accommodating portion.

17. The battery according to claim 16, wherein
the electrical kit comprises at least one of a sampling structure, a battery management system, a relay, and a high-voltage power distribution unit.

18. The battery according to claim 16 or 17, wherein
the accommodating case has a boss, the boss is formed by the accommodating case protruding, along the first direction, in the direction away from the battery cell, one side that is of the boss and that faces the battery cell forms the accommodating portion, at least a part of the pole and at least a part of the electrical kit are located in the accommodating portion and leave a gap with the inner wall of the boss.

19. The battery according to claim 18, wherein
the length direction of the boss is consistent with the second direction, the length of the boss along the second direction is greater than or equal to the length of the accommodating cavity along the second direction, and the second direction is consistent with the width direction of the first surface; or
the length direction of the boss is consistent with the third direction, the length of the boss along the third direction is greater than or equal to the length of the accommodating cavity along the third direction, and the third direction is consistent with the length direction of the first surface.

20. The battery according to claim 19, wherein
the length of the boss along the second direction or the third direction is not greater than 500 mm.

21. The battery according to claim 20, wherein
the length of the boss along the second direction or the third direction is within the range of 50 mm to 300 mm.

22. The battery according to any one of claims 14 to 21, wherein
a protrusion is disposed in the first region of the battery cell, the pole is disposed on the surface of one side that is of the protrusion and that faces the first direction, and at least a part of the protrusion is located in the accommodating portion.

23. The battery according to claim 22, wherein
the pole comprises a positive electrode pole and a negative electrode pole, and the positive electrode pole and the negative electrode pole are spaced apart from each other on the protrusion.

24. The battery according to claim 23, wherein
there is one protrusion, the positive electrode pole and the negative electrode pole are spaced apart from each other on the protrusion, and the connecting line between the positive electrode pole and the negative electrode pole is parallel to the length direction of the first surface, or the connecting line between the positive electrode pole and the negative electrode pole is parallel to the width direction of the first surface.

25. The battery according to claim 23, wherein
at least two protrusions are spaced apart from each other, the positive electrode pole is disposed on one of the protrusions, and the negative electrode pole is disposed on the other of the protrusions.

26. The battery according to any one of claims 21 to 24, wherein
the length direction of the first surface, the length direction of the protrusion, and the third direction are consistent, and
along the third direction, the length of the protrusion is 10% to 30% of the length of the battery cell.

27. The battery according to claim 26, wherein
along the third direction, the distance between the center point of the protrusion and the center point of the first surface is 0% of the length of the battery cell, or the distance between the center point of the protrusion and the center point of the first surface is within the range of 45% to 47.5% of the length of the battery cell.

28. The battery according to any one of claims 22 to 27, wherein
along the first direction, the height of the pole, disposed on the protrusion, from the first surface of the battery is greater than or equal to the height of the heat exchange assembly, and a gap is reserved between the protrusion, the pole, the electrical kit, and the inner wall surface of the boss.

29. The battery according to any one of claims 14 to 17, wherein
the accommodating case is provided with a through hole that allows the first region to be opened to the outside, and a detachable closing cover is disposed at the through hole; and
the projection of the through hole along the first direction and the projection of the first region along the first direction have an overlapping portion.

30. The battery according to claim 29, wherein
a sealing member is disposed around the through hole, and the sealing member is used for sealing between the through hole and the closing cover.

31. The battery according to claim 29 or 30, wherein
the closing cover is configured as a flat plate; or
the closing cover is configured to be convex relative to the surface of the accommodating case, one side that is of the closing cover and that faces the battery cell forms the accommodating portion, and at least a part of the pole is located in the accommodating portion via the through hole.

32. The battery according to any one of claims 29 to 31, wherein
the through hole is provided on the wall surface that is of the boss and that faces the battery cell.

33. An electric device, comprising
the battery according to any one of claims 1 to 32, wherein the battery serves as a power source of the electric device.

34. The electric device according to claim 33, wherein
the plurality of battery cells are arranged along the second direction to form a battery cell queue, and the second direction is consistent with the width direction of the first surface;
the surface of the accommodating case is configured to have a boss extending along the second direction, and the boss is formed by the surface of the accommodating case protruding, along the first direction, in the direction away from the battery cell;
the electric device is a vehicle, the vehicle further comprises at least one seat, the battery is located on the side of the seat along an up-down direction of the vehicle, the through hole of the battery faces the other side of the up-down direction of the vehicle, the up-down direction of the vehicle is consistent with the first direction, and the first direction is perpendicular to the second direction; and
the projection of the seat on the battery along the up-down direction of the vehicle is located outside the range of the boss.

35. The electric device according to claim 34, wherein
the vehicle comprises at least one seat row, the seat row comprises at least two seats arranged along the left-right direction of the vehicle, the left-right direction of the vehicle is the third direction, and the third direction is perpendicular to both the first direction and the second direction; and
along the left-right direction of the vehicle, the boss is located between adjacent seats in the same seat row, and/or the bosses are located on two sides of the same seat row in the left-right direction of the vehicle.

36. The electric device according to claim 35, wherein
the battery cells are arranged along the second direction and the third direction to form a battery cell array;
when the number of the battery cells arranged along the third direction is greater than the number of the battery cells arranged along the second direction, the number of the battery cells arranged along the second direction is not more than 2; and
when the number of the battery cells arranged along the third direction is less than the number of the battery cells arranged along the second direction, the number of the battery cells arranged along the third direction is not more than 4.

37. An energy storage device, comprising the battery according to any one of claims 1 to 32, wherein the battery is configured to be capable of storing and providing electric energy.
